(19) Europäisches Patentamt
European Patent Office
Office européen des brevets

(11) EP 4 123 646 B1

(12) **EUROPEAN PATENT SPECIFICATION**

(45) Date of publication and mention of the grant of the patent:
**19.02.2025 Bulletin 2025/08**

(21) Application number: **21850172.4**

(22) Date of filing: **17.06.2021**

(51) International Patent Classification (IPC):
***G10L 21/0208*** *(2013.01)* ***G10L 21/028*** *(2013.01)*

(52) Cooperative Patent Classification (CPC):
**G10L 21/028; G10L 21/0208; G10L 25/84;**
G10L 2021/02087; G10L 2021/02166

(86) International application number:
**PCT/CN2021/100472**

(87) International publication number:
**WO 2022/022139 (03.02.2022 Gazette 2022/05)**

# (54) VOICE DETECTION METHOD BASED ON MULTIPLE SOUND REGIONS, RELATED DEVICE, AND STORAGE MEDIUM

SPRACHDETEKTIONSVERFAHREN AUF BASIS MEHRERER KLANGBEREICHE, ZUGEHÖRIGE VORRICHTUNG UND SPEICHERMEDIUM

PROCÉDÉ DE DÉTECTION VOCALE BASÉE SUR DES RÉGIONS SONORES MULTIPLES, DISPOSITIF ASSOCIÉ ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2020 CN 202010732649**

(43) Date of publication of application:
**25.01.2023 Bulletin 2023/04**

(73) Proprietor: **Tencent Technology (Shenzhen) Company Limited**
**Shenzhen, Guangdong, 518057 (CN)**

(72) Inventors:
- **ZHENG, Jimeng**
**Shenzhen, Guangdong 518057 (CN)**
- **CHEN, Lianwu**
**Shenzhen, Guangdong 518057 (CN)**
- **LI, Weiwei**
**Shenzhen, Guangdong 518057 (CN)**
- **DUAN, Zhiyi**
**Shenzhen, Guangdong 518057 (CN)**
- **YU, Meng**
**Shenzhen, Guangdong 518057 (CN)**
- **SU, Dan**
**Shenzhen, Guangdong 518057 (CN)**
- **JIANG, Kaiyu**
**Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(56) References cited:
**EP-A2- 1 116 961**
**EP-B1- 2 011 366**
**CN-A- 1 813 284**
**CN-A- 101 297 587**
**CN-A- 108 370 470**
**CN-A- 110 797 051**
**CN-A- 111 833 899**
**US-A1- 2005 111 674**

- **GUOBIN OU ET AL: "Speaker identification using speech and lip features", NEURAL NETWORKS, 2005. PROCEEDINGS. 2005 IEEE INTERNATIONAL JOINT CONF ERENCE ON MONTREAL, QUE., CANADA 31 JULY-4 AUG. 2005, PISCATAWAY, NJ, USA,IEEE, US, 31 July 2005 (2005-07-31), pages 2565, XP031213385, ISBN: 978-0-7803-9048-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

The present disclosure relates to the field of speech detection technology.

### BACKGROUND

With the wide application of far-field speech in people's daily life, performing processing such as voice activity detection (VAD), separation, enhancement, recognition, calling, and the like on each possible sound source in a multi-sound source (or multi-user) scenario has become a bottleneck of multiple types of intelligent speech products in improving the voice interaction performance.

A single channel pre-processing system based on a main speaker detection algorithm is designed in the conventional solution. The pre-processing system generally estimates a speaker whose signal power (that is, signal power reaching a microphone array) is highest and an azimuth thereof by estimating the azimuth in combination with the signal power or estimating the azimuth in combination with the spatial spectrum, and determines the speaker and the azimuth as a main speaker and an azimuth thereof.

EP2011366B1 discloses a voice conference apparatus that picks up sound (speaking) generated at a specific spot or area, which is a destination of a sound-pickup beam, at a high gain, and suppresses sound (noise) generated at other areas. A sound-pickup area is selected using a numeric keypad provided at the upper surface of the housing of the voice conference apparatus.

GUOBIN OU ET AL: "Speaker identification using speech and lip features" (NEURAL NETWORKS, 2005. PROCEEDINGS. 2005 IEEE INTERNATIONAL JOINT CONFERENCE ON MONTREAL) discloses speaker identification using speech and lip features, where a speech waveform is divided into a sequence of fixed width segments with adjacent segments overlapped, the segments that are likely to be the silence or the unvoiced consonants are detected and removed, and only the voiced frames are passed to a speech feature extraction module for extracting lip features.

However, in a case that multiple speakers exist in the environment, since the main speaker may be farther away from the microphone array relative to an interference speaker, determining the main speaker only according to the signal power may be flawed. Although the volume of the main speaker may be higher than the interference speaker, a speech signal of the main speaker has a greater propagation loss in the space, and a signal power reaching the microphone array may be lower, resulting in a poor effect in subsequent speech processing.

### SUMMARY

The invention is directed to a speech detection method based on multiple sound regions as claimed by claim 1, and a computer device, a computer-readable storage medium and a computer program product as respectively claimed by claims 11 to 13.

### BRIEF DESCRIPTION OF THE DRAWINGS

FIG. 1 is a schematic diagram of an environment of a multi-user conference scenario according to an embodiment of the present disclosure.

FIG. 2 is a schematic diagram of a speech detection system according to an embodiment of the present disclosure.

FIG. 3 is a schematic diagram of a speech detection method based on multiple sound regions according to an embodiment of the present disclosure.

FIG. 4 is a schematic diagram of a manner for dividing multiple sound regions according to an embodiment of the present disclosure.

FIG. 5 is a schematic architectural diagram of a multi-channel sound pickup system according to an embodiment of the present disclosure.

FIG. 6 is a schematic architectural diagram of a multi-channel sound pickup system according to another embodiment of the present disclosure.

FIG. 7 is a schematic diagram of an interface of implementing calling by using a speech detection method based on multiple sound regions according to an embodiment of the present disclosure.

FIG. 8 is a schematic architectural diagram of a multi-channel sound pickup system according to another embodiment of the present disclosure.

FIG. 9 is a schematic diagram of an interface of implementing responding by using a speech detection method based on multiple sound regions according to an embodiment of the present disclosure.

FIG. 10 is a schematic architectural diagram of a multi-channel sound pickup system according to another embodiment of the present disclosure.

FIG. 11 is a schematic diagram of implementing text recording by using a speech detection method based on multiple sound regions according to an embodiment of the present disclosure.

FIG. 12 is a schematic diagram of a speech detection apparatus according to an embodiment of the present disclosure.

FIG. 13 is a schematic structural diagram of a computer device according to an embodiment of the present disclosure.

## DESCRIPTION OF EMBODIMENTS

A speech detection method based on multiple sound regions and related apparatus, and a storage medium are provided according to embodiments of the present disclosure. In a multi-sound source scenario, speech signals in different directions may be retained or suppressed by using a control signal, so that speeches of respective users can be separated and enhanced in real time, thereby improving the accuracy of speech detection and improving the effect of speech processing.

It is to be understood that, the speech detection method based on multiple sound regions according to the present disclosure can perform speech recognition and semantic recognition in a case that multiple users simultaneously speak, and then determine which user to respond to. A case that multiple users speak is likely to occur in a far-field recognition scenario. For example, a case that multiple users simultaneously speak may occur in a conference room, a car, or a room with a smart home, and as a result, signals from multiple sources may interfere with each other and affect detection. The speech detection method based on multiple sound regions according to the present disclosure can resolve the problem of signal interference existing in the foregoing scenario. For example, a case that multiple users in a surrounding environment simultaneously speak often occurs in a wake-up-free scenario of a smart speaker product. In view of this, according to the method in the present disclosure, which user to respond to is first determined, then recognition is performed on speech content of the user in terms of content and intention, and whether to respond to a voice command of the user is determined by the smart speaker product according to a recognition result.

For ease of understanding, the speech detection method according to the present disclosure is described below with reference to a specific scenario. Referring to FIG. 1, FIG. 1 is a schematic diagram of an environment of a multi-user conference scenario according to an embodiment of the present disclosure. As shown in the figure, in a far-field conference scenario, there may be multiple participants in a conference room at the same time, for example, a user 1, a user 2, a user 3, a user 4, a user 5, and a user 6. A conference system may include a screen, a camera, and a microphone array. The microphone array is configured to collect speech of the six users, the camera is configured to capture real-time pictures of the six users, and the screen may display the pictures of the six users and display information related to the conference. For a call application, a main speaker in a conference scenario (in which there may usually be one or two main speakers) needs to be determined in real time, and speech of the main speaker is enhanced and transmitted to a remote end to which a call is connected. In addition, in the conference scenario, for a conference transcription function, whether each of the users speaks needs to be determined in real time, so that speech of a speaker is separated and enhanced and is transmitted to an automatic speech recognition (ASR) service module in a cloud, and speech content is recognized by using the ASK service module.

The speech detection method based on multiple sound regions according to the present disclosure is applicable to a speech detection system shown in FIG. 2. Referring to FIG. 2, FIG. 2 is a schematic diagram of a speech detection system according to an embodiment of the present disclosure. As shown in the figure, the speech detection system includes a server and a terminal device. The server involved in the present disclosure may be an independent physical server, or may be a server cluster or a distributed system formed by multiple physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. The terminal device may be a smart television, a smart speaker, a smartphone, a tablet computer, a notebook computer, a palmtop computer, a personal computer, or the like. The present disclosure is not limited thereto.

In the speech detection system, the terminal device may communicate with the server through a wireless network, a wired network, or a movable storage medium. The foregoing wireless network uses a standard communication technology and/or protocol. The wireless network is usually the Internet, but may alternatively be any another network, including but not limited to, a Bluetooth, a local area network (LAN), a metropolitan area network (MAN), a wide area network (WAN), or any combination of a mobile network, a dedicated network, or a virtual dedicated network. In some embodiments, custom or dedicated data communication technologies may be used in place of or in addition to the foregoing data communication technologies. The movable storage medium may be a universal serial bus (USB) flash drive, a removable hard disk, or another movable storage medium. This is not limited in the present disclosure. Although FIG. 2 merely shows five types of terminal devices, it is to be understood that, examples in FIG. 2 are merely used to understand the technical solution, and are not to be construed as a limitation on the present disclosure.

Based on the speech detection system shown in FIG. 2, the microphone array equipped on the terminal device picks up a speech signal and other sounds in an environment and then transmits a collected digital signal to a pre-processing module of the speech signal, and the pre-processing module perform processing such as extraction, enhancement, VAD detection, speaker detection, and main speaker detection on target speech. The processing is flexibly determined according to a scenario and functional requirements. A speech signal enhanced by the pre-processing module may be sent to the server, and a speech recognition module or a voice call module deployed in the server processes the enhanced speech signal.

The speech detection method based on multiple sound regions according to the present disclosure is described below with reference to the foregoing description. Referring to FIG. 3, a speech detection method based on multiple sound regions according to an embodiment of the present disclosure includes the following steps 101 to 104.

In step 101, for each of N sound regions, sound region information corresponding to the sound region is obtained, the sound region information including a sound region identifier, a pointing angle, and user information, the sound region identifier identifying the sound region, the pointing angle indicating a central angle of the sound region, the user information indicating a user retention situation in the sound region, N being an integer greater than 1.

In this embodiment, a space within a visual range may first be divided into N sound regions. For ease of description, referring to FIG. 4, FIG. 4 is a schematic diagram of a manner of dividing multiple sound regions according to an embodiment of the present disclosure. As shown in the figure, assuming that a 360-degree space can be divided into 12 sound regions, each sound region is 30 degrees, and a central angle of each sound region is $\theta_{i=1,...,N}$, for example, $\theta_1$ =15 degrees, $\theta_2$ =45 degrees, and $\theta_3$ =75 degrees. The rest can be deduced by analogy. FIG. 4 is merely an example, in actual application, N is an integer greater than or equal to 2, such as 12, 24, 36, and the like. The division quantity differs according to the amount of computation. In addition, the space within the visual range may further be non-uniformly divided. This is not limited herein. Each sound region corresponds to one sound source, assuming that there may be two or more users in a specific sound region, these users may also be considered as a same person. Therefore, during actual sound region division, each sound region may be divided as finely as possible.

A speech detection apparatus may obtain sound region information corresponding to each sound region after the sound region division is completed. The sound region information includes a sound region identifier, a pointing angle, and user information, for example, sound region information of the first sound region may be represented as $\{(i, \theta_i, \lambda_i)\}_{i=1}$, sound region information of the second sound region may be represented as $\{(i, \theta_i, \lambda_i)\}_{i=2}$ , and the rest can be deduced by analogy. $i$ represents an $i$ th sound region, $\theta_i$ represents a pointing angle corresponding to the $i$ th sound region, and $\lambda_i$ represents user information corresponding to the $i$ th sound region. The user information indicates a user retention situation in the sound region, for example, assuming that no user exists in the $i$ th sound region, $\lambda_i$ may be set to -1; and assuming that a user exists in the $i$ th sound region, $\lambda_i$ may be set to 1.

The method according to the embodiments of the present disclosure may be performed by a computer device, and specifically may be performed by the speech detection apparatus deployed on the computer device. The computer device may be a terminal device, or may be a server, that is, the speech detection apparatus may be deployed on the terminal device, or may be deployed on the server. Certainly, the speech detection apparatus may also be deployed in the speech detection system, that is, the speech detection apparatus may implement the method according to the present disclosure based on a multi-channel sound pickup system.

In step 102, for each of the N sound regions, the sound region is used as a target detection sound region, and a control signal corresponding to the target detection sound region is generated according to sound region information corresponding to the target detection sound region, the control signal being used for performing suppression processing or retention processing on an input speech signal, the control signal and the sound region being in a one-to-one correspondence.

In this embodiment, for each of the N sound regions, after obtaining the sound region information corresponding to the sound region, the speech detection apparatus may use the sound region as a target detection sound region, and generate a control signal corresponding to the target detection sound region according to sound region information corresponding to the target detection sound region, to generate a control signal corresponding to the sound region, where the control signal may suppress or retain an input speech signal obtained through the microphone array. Assuming that it is detected that no user exists in the $i^{th}$ sound region, it indicates that an input speech signal in the sound region belongs to noise (abnormal human voice). Therefore, a control signal generated for the sound region may perform suppression processing on the input speech signal. Assuming that it is detected that a user exists in the $i^{th}$ sound region and an input speech signal in the sound region belongs to normal human voice, a control signal generated for the sound region may perform retention processing on the input speech signal.

Whether a user exists in a sound region may be detected by using a computer vision (CV) technology, or whether a user exists in a current sound region may be estimated by using a spatial spectrum.

In step 103, an input speech signal corresponding to the target detection sound region is processed by using the control signal corresponding to the target detection sound region, to obtain an output speech signal corresponding to the target detection sound region, the control signal, the input speech signal, and the output speech signal being in a one-to-one correspondence.

In this embodiment, for each of the N sound regions, after obtaining the control signal corresponding to the sound region, the speech detection apparatus may still use the sound region as the target detection sound region, and process the input speech signal corresponding to the target detection sound region by using the control signal corresponding to the target detection sound region, to obtain the output speech signal corresponding to the target detection sound region, and in other words, suppression processing or retention processing is performed on an input speech signal in a corresponding sound region by using the control signal corresponding to the sound region, thereby outputting an output speech signal corresponding to the sound region. For example, in a case that no user exists in the $i^{th}$ sound region, a control signal of the $i^{th}$ sound region may be "0", that is, suppression processing is performed on an input speech signal corresponding to the sound region. In another example, in a case that a user normally speaking exists in the $i^{th}$ sound region, the control signal corresponding to the $i^{th}$ sound region may be "1", that is, retention processing is performed on the input speech signal corresponding to the sound region. Further, processing such as extraction, separation, and enhancement may be performed on the input speech signal corresponding to the sound region.

In step 104, a speech detection result for the target detection sound region is generated according to the output speech signal corresponding to the target detection sound region.

In this embodiment, to improve the quality of the output speech signal, for each of the N sound regions, the speech detection apparatus may further perform post-processing on the output speech signal corresponding to the sound region, that is, use the sound region as the target detection sound region, and generate the speech detection result corresponding to the target detection sound region according to the output speech signal corresponding to the target detection sound region. For example, processing such as cross-channel post-processing and noise reduction post-processing are performed on the output speech signal corresponding to the target detection sound region, and the post-processed output speech signal is detected to finally generate a speech detection result corresponding to the sound region, and it is further determined whether to respond to voice from the sound region. In some cases, the speech detection apparatus may detect whether each sound region meets a human voice matching condition. In a case that the $i^{th}$ sound region meets the human voice matching condition, a speech detection result corresponding to the $i^{th}$ sound region may indicates "a user exists in the $i^{th}$ sound region". In a case that the $i^{th}$ sound region does not meet the human voice matching condition, the speech detection result corresponding to the $i^{th}$ sound region indicates that "no user exists in the $i^{th}$ sound region".

In the present disclosure, speech detection may be implemented based on the multi-channel sound pickup system. Referring to FIG. 5, FIG. 5 is a schematic architectural diagram of a multi-channel sound pickup system according to an embodiment of the present disclosure. As shown in the figure, the microphone array equipped on the terminal device may pick up an audio signal corresponding to each sound region, where the audio signal includes an input speech signal and a noise signal. A control signal corresponding to each sound region is generated by a signal separator, suppression processing or retention processing is performed on an input speech signal of a corresponding pointing angle by using the control signal corresponding to the sound region, and then cross-channel post-processing and noise reduction post-processing are performed on each output speech signal, to obtain a target output speech signal corresponding to the sound region. Finally, a speech detection result is determined based on sound region information and the target output speech signal of each sound region, that is, a speech detection result for each of the N sound regions is obtained.

A speech detection method based on multiple sound regions is provided according to the embodiments of the present disclosure. Firstly, for each of the N sound regions, sound region information corresponding to the sound region is obtained, the sound region information including a sound region identifier, a pointing angle, and user information, so that the sound region may be used as a target detection sound region, and a control signal corresponding to the target detection sound region is generated according to the sound region information corresponding to the target detection sound region. Then, an input speech signal corresponding to the target detection sound region is processed by using the control signal corresponding to the target detection sound region, to obtain an output speech signal corresponding to the target detection sound region. Finally, a speech detection result for the target detection sound region is generated according to the output speech signal corresponding to the target detection sound region, so that the speech detection result corresponding to each sound region is obtained, thereby facilitating determining, according to the speech detection result, whether to respond to a user corresponding to the sound region. In the foregoing manner, speech signals in different directions are processed in parallel based on multiple sound regions, so that in a multi-sound source scenario, speech signals in different directions may be retained or suppressed by using control signals, so that speeches of respective users can be separated and enhanced in real time, thereby improving the accuracy of speech detection and improving the effect of subsequent speech processing.

Based on the embodiment corresponding to FIG. 3, the obtaining, for each of N sound regions, sound region information corresponding to the sound region includes the following steps:

for each of the N sound regions, detecting the sound region, to obtain a user detection result corresponding to the sound region;
for each of the N sound regions, using the sound region as the target detection sound region, and determining user information corresponding to the target detection sound region according to the user detection result corresponding to the target detection sound region;
determining lip motion information corresponding to the target detection sound region according to the user detection result corresponding to the target detection sound region;
obtaining a sound region identifier corresponding to the target detection sound region and a pointing angle corresponding to the target detection sound region; and
generating the sound region information corresponding to the target detection sound region according to the user information corresponding to the target detection sound region, the lip motion information corresponding to the target detection sound region, the sound region identifier corresponding to the target detection sound region, and the pointing angle corresponding to the target detection sound region.

A manner of obtaining sound region information based on the CV technology is described in this embodiment. Generally, a corresponding camera needs to be configured to capture a picture of the user, the camera may be one wide-angle camera, and for a 360-degree space, the camera is fully covered by two or three wide-angle cameras in a spliced manner. Each user in the space may be detected and numbered by using the CV technology, and related information may further be provided, for example, user identity information, a face azimuth, lip motion information, a facial orientation, a face distance, and the like. Each of N sound regions is detected, to obtain a user detection result corresponding to the sound region. The description is made in the present disclosure by using an example in which the user detection result includes user identity information and lip motion information, but this is not to be construed as a limitation on the present disclosure.

The user detection result includes user information and the lip motion information. The user information includes: whether a user exists, and whether identity information of the user is extractable in a case that a user exists. For example, a user exists in the second sound region, and the user is recognized and determined as "Xiao Li" whose corresponding identity is "01011". In another example, no user exists in the fifth sound region, and there is no need to perform recognition. The lip motion information indicates whether a lip of the user moves or not. Generally, the lip moves when a person is speaking. Therefore, whether the user is speaking or not may further be determined based on the lip motion information. For each of the N sound regions, a sound region identifier corresponding to the sound region and a pointing angle corresponding to the sound region may be determined with reference to pre-divided sound regions, thereby generating sound region information $\{(i,\theta_i,\lambda_i,L_i)\}_{i=1,\ldots,N}$ corresponding to the sound region. $i$ in the sound region information $\{(i,\theta_i,\lambda_i,L_i)\}_{i=1,\ldots,N}$ represents an $i^{th}$ sound region, $\theta_i$ represents a pointing angle of the $i^{th}$ sound region, $\lambda_i$ represents user information of the $i^{th}$ sound region, and $L_i$ represents lip motion information of the $i^{th}$ sound region.

In addition, in an embodiment of the present disclosure, the manner of obtaining sound region information based on the CV technology is provided. In the foregoing manner, more sound region information may be detected by using the CV technology, which is equivalent to a case that a related situation of the user in each sound region may be "saw", for example, whether a user exists, user information of the user, whether the user has lip motion, and the like, so that multi-modal information may be integrated and utilized, thereby further improving the accuracy of speech detection through information in a visual dimension, and providing a feasible manner for subsequent processing of solutions of related videos.

In some cases, based on the embodiment corresponding to FIG. 3, in another optional embodiment according to the embodiments of the present disclosure, the determining user information corresponding to the target detection sound region according to a user detection result corresponding to the target detection sound region specifically includes the following steps:

determining a first identity as the user information in a case that the user detection result corresponding to the target detection sound region indicates that a recognizable user exists in the target detection sound region;

determining a second identity as the user information in a case that the user detection result corresponding to the target detection sound region indicates that no user exists in the target detection sound region;

determining a third identity as the user information in a case that the user detection result corresponding to the target detection sound region indicates that an unknown user exists in the target detection sound region; and

the determining lip motion information corresponding to the target detection sound region according to the user detection result corresponding to the target detection sound region specifically includes the following steps:

determining a first motion identifier as the lip motion information in a case that the user detection result corresponding to the target detection sound region indicates that a user with lip motion exists in the target detection sound region;

determining a second motion identifier as the lip motion information in a case that the user detection result corresponding to the target detection sound region indicates that a user exists in the target detection sound region and the user does not have lip motion; and

determining a third motion identifier as the lip motion information in a case that the user detection result corresponding to the target detection sound region indicates that no user exists in the target detection sound region.

A manner of extracting lip motion information and user information based on the CV technology is described in this embodiment. Since the user information and the lip motion information need to be determined according to an actual situation, user information and lip motion information in each sound region need to be detected, which is described in detail below.

I. Recognition Manner for User Information

For ease of description, any one of the N sound regions is used as an example to describe the present disclosure, and user information in other sound regions is determined in a similar manner, which is not described herein. Any one of the N sound regions may be used as the target detection sound region, assuming that the sound region is an $i^{th}$ sound region, whether a user exists in the $i^{th}$ sound region and whether identity information of the user may be obtained in a case that a user exists may be determined based on a user detection result of the $i^{th}$ sound region. User information corresponding to the $i^{th}$ sound region is represented as $\lambda_i$, which is represented as user information in a direction with a pointing angle $\theta_i$. In a case that a user exists in the direction with the pointing angle $\theta_i$ and identity information of the user may be determined, it indicates that a name and identity of the user may be determined, and $\lambda_i$ is a first identity of the user, which may be, for example, "5". In a case that no user exists in the direction with the pointing angle $\theta_i$, $\lambda_i$ may be set to a special value, that is, a second identity, for example, "-1". In a case that a function of face recognition is not configured, that is, the identity information of the user cannot be determined, $\lambda_i$ may be set to another special value, that is, a third identity, for example, "0", to inform a subsequent processing module that although there is a user in the direction, the identity is unknown, and if necessary, identity information of the user may be further recognized through voiceprint recognition.

II. Recognition Manner for Lip Motion Information

For ease of description, any one of the N sound regions is used as an example to describe the present disclosure, and lip motion information in other sound regions is determined in a similar manner, which is not described herein. Any one of the N sound regions may be used as the target detection sound region, assuming that the sound region is an $i^{th}$ sound region, whether a user exists in the $i^{th}$ sound region and whether the user has lip motion in a case that a user exists may be determined based on a user detection result of the $i^{th}$ sound region. An unmovable wide-angle camera is generally adopted as the camera. All people and faces within the visual range are detected by using a CV algorithm, local facial image are cut out, and it is determined whether an upper lip on a face is moving through the CV algorithm. Lip motion information corresponding to the $i^{th}$ sound region is represented as $L_i$, which is represented as lip motion information in a direction with a pointing angle $\theta_i$. In a case that a user exists in the direction with the pointing angle $\theta_i$ and the user is determined to have lip motion, $L_i$ may be set to a first motion identifier, for example, "0". In a case that a user exists in the direction with the pointing angle $\theta_i$ but the user does not have lip motion, $L_i$ may be set to a second motion identifier, for example, "1". In a case that no user exists in the direction with the pointing angle $\theta_i$, $L_i$ may be set to a special value, that is, a third motion identifier, for example, "-1".

In summary, a manner of extracting lip motion information and user information based on the CV technology is provided according to an embodiment of the present disclosure. With this manner, the user information and the lip motion information of the user are analyzed in multiple aspects, the feasibility of recognition may be improved as much as possible, and information included in each sound region is analyzed in multiple dimensions, thereby improving the operability of the technical solution.

Based on the embodiment corresponding to FIG. 3, in another optional embodiment according to the embodiments of the present disclosure, the generating a control signal corresponding to the target detection sound region according to sound region information corresponding to the target detection sound region includes the following steps:

generating a first control signal in a case that user information corresponding to the target detection sound region indicates that no user exists in the target detection sound region, the first control signal belonging to the control signal, and the first control signal being used for performing suppression processing on the input speech signal; and

generating a second control signal in a case that the user information corresponding to the target detection sound region indicates that a user exists in the target detection sound region, the second control signal belonging to the control signal, and the second control signal being used for performing retention processing on the input speech signal.

A manner of generating the control signal without adopting the CV technology is described in this embodiment. In a case that the CV technology is not adopted, a user identity cannot be recognized, and lip motion information of the user cannot be obtained. In this case, whether a user exists in a current sound region may be estimated by using a spatial spectrum, so that sound region information of N sound regions is obtained, where the sound region information of the N sound regions may be represented as $\{(i, \theta_i, \lambda_i)\}_{i=1,...,N}$.

For ease of description, any one of the N sound regions is used as an example to describe the present disclosure, and a control signal in another sound region may be generated in a similar manner, which is not described herein. Any one of the N sound regions may be used as a target detection sound region, assuming that the sound region is an $i^{th}$ sound region, and sound region information of the $i^{th}$ sound region is $\{(i, \theta_i, \lambda_i)\}$, where user information $\lambda_i$ may indicate that no user exists in a direction with a pointing angle $\theta_i$ or a user exists in a direction with a pointing angle $\theta_i$, and if necessary, identity information of the user may further be recognized through voiceprint recognition, which is not described in detail herein. During the generation of the control signal, if it is detected that no user exists in the $i^{th}$ sound region, all signals at the pointing angle $\theta_i$ may be learned and suppressed through a signal separator, that is, a first control signal is generated through the signal separator, and all the signals at the pointing angle $\theta_i$ are suppressed by using the first control signal. If it is detected that a user exists in the $i^{th}$ sound region, signals at the pointing angle $\theta_i$ may be learned and retained through the signal separator, that is, a second control signal is generated through the signal separator, and the signals at the pointing angle $\theta_i$ are retained by using the second control signal.

In addition, in an embodiment of the present disclosure, the manner of generating the control signal without adopting the CV technology is provided. In the foregoing manner, the control signal may be generated by using only audio data. In this way, on the one hand, the flexibility of the technical solution is improved; and on the other hand, the control signal may be generated based on less information, thereby saving operation resources, improving the efficiency of generating the control signal, and saving power for the device.

Based on the embodiment corresponding to FIG. 3, the generating a control signal corresponding to the target detection sound region according to sound region information corresponding to the target detection sound region specifically includes the following steps:

generating a first control signal in a case that user information corresponding to the target detection sound region indicates that no user exists in the target detection sound region, the first control signal belonging to the control signal, and the first control signal being used for performing suppression processing on the input speech signal; and

generating the first control signal in a case that the user information corresponding to the target detection sound region indicates that a user exists in the target detection sound region and the user does not have lip motion;

generating a second control signal in a case that the user information corresponding to the target detection sound region indicates that a user exists in the target detection sound region and the user has lip motion, the second control signal belonging to the control signal, and the second control signal being used for performing retention processing on the input speech signal; and

generating the first control signal or the second control signal according to an original audio signal in a case that the user information corresponding to the target detection sound region indicates that a user exists in the target detection sound region and a lip motion situation of the user is unknown.

A manner of generating a control signal adopting the CV technology is described in this embodiment. In a case that the CV technology is adopted, a user identity may be recognized, and lip motion information of the user is obtained. In this case, whether a user exists in a current sound region may be estimated only by using the CV technology, or whether a user exists in a current sound region is determined by using the CV technology in combination with spatial spectrum estimation, so that sound region information of N sound regions is obtained, where the sound region information of the N sound regions may be represented as $\{(i, \theta_i, \lambda_i, L_i)\}_{i=1,\ldots,N}$ .

For ease of description, any one of the N sound regions is used as an example to describe the present disclosure, and a control signal in another sound region may be generated in a similar manner, which is not described herein. Any one of the N sound regions may be used as the target detection sound region, assuming that the sound region is an $i^{th}$ sound region, and sound region information of the $i^{th}$ sound region is $\{(i, \theta_i, \lambda_i, L_i)\}$, where user information $\lambda_i$ may be a first identity, a second identity, or a third identity, and lip motion information may be a first motion identifier, a second motion identifier, or a third motion identifier. Specifically, during the generation of the control signal, if it is detected that no user exists in the $i^{th}$ sound region, all signals at the pointing angle $\theta_i$ may be learned and suppressed through a signal separator, that is, a first control signal is generated through the signal separator, and all the signals at the pointing angle $\theta_i$ are suppressed by using the first control signal. If it is detected that a user exists in the $i^{th}$ sound region, whether the user has lip motion needs to be further determined.

If it is detected that a user exists in the $i^{th}$ sound region, but the user does not have lip motion, all signals at the pointing angle $\theta_i$ may be learned and suppressed through a signal separator, that is, a first control signal is generated through the signal separator, and all the signals at the pointing angle $\theta_i$ are suppressed by using the first control signal.

If it is detected that a user exists in the $i^{th}$ sound region and the user has lip motion, signals at the pointing angle $\theta_i$ may be learned and retained through the signal separator, that is, a second control signal is generated through the signal separator, and the signals at the pointing angle $\theta_i$ are retained by using the second control signal.

If it is detected that a user exists in the $i^{th}$ sound region, the lip cannot be clearly captured by the camera due to an unclear face or a relatively large face deflection angle, resulting in that a lip motion situation of the user cannot be determined due to. In view of this, spatial spectrum estimation or azimuth estimation needs to be performed on an original audio signal inputted at the pointing angle $\theta_i$ , to roughly determine whether the user is speaking. If it is determined that the user is speaking, signals at the pointing angle $\theta_i$ may be learned and retained through the signal separator, that is, the second control signal is generated through the signal separator, and the signals at the pointing angle $\theta_i$ are retained by using the second control signal. If it is determined that the user does not speak, all signals at the pointing angle $\theta_i$ may be learned and suppressed through a signal separator, that is, the first control signal is generated through the signal separator, and all the signals at the pointing angle $\theta_i$ are suppressed by using the first control signal.

In summary, in an embodiment of the present disclosure, the manner of generating the control signal by adopting the CV technology is provided. In the foregoing manner, the control signal is generated according to both audio data and image data. In this way, on the one hand, the flexibility of the technical solution is improved; and on the other hand, the control signal generated based on more information may be more accurate, thereby improving the accuracy of speech detection.

Based on the embodiment corresponding to FIG. 3, in another optional embodiment according to the embodiments of the present disclosure, the generating a control signal corresponding to the target detection sound region according to sound region information corresponding to the target detection sound region specifically includes the following steps:

generating the control signal corresponding to the target detection sound region according to the sound region information corresponding to the target detection sound region by using a preset algorithm, the preset algorithm being an adaptive beamforming algorithm, a blind source separation algorithm, or a deep learning-based speech separation algorithm; and

the processing an input speech signal corresponding to the target detection sound region by using the control signal corresponding to the target detection sound region, to obtain an output speech signal corresponding to the target detection sound region specifically includes the following steps:

processing, in a case that the preset algorithm is the adaptive beamforming algorithm, the input speech signal corresponding to the target detection sound region according to the control signal corresponding to the target detection sound region by using the adaptive beamforming algorithm, to obtain the output speech signal corresponding to the target detection sound region;

processing, in a case that the preset algorithm is the blind source separation algorithm, the input speech signal corresponding to the target detection sound region according to the control signal corresponding to the target detection sound region by using the blind source separation algorithm, to obtain the output speech signal corresponding to the target detection sound region; and

processing, in a case that the preset algorithm is the deep learning-based speech separation algorithm, the input speech signal corresponding to the target detection sound region according to the control signal corresponding to the target detection sound region by using the deep learning-based speech separation algorithm, to obtain the output speech signal corresponding to the target detection sound region.

A manner of signal separation based on the control signal is described in this embodiment. The preset algorithm adopted during the generation of the control signal is consistent with an algorithm adopted during signal separation in actual application. The present disclosure provides three preset algorithms including, an adaptive beamforming algorithm, a blind source separation algorithm, and a deep learning-based speech separation algorithm. The signal separation is described below with reference to the three preset algorithms.

1. The adaptive beamforming algorithm

Adaptive beamforming is also referred to as adaptive spatial filtering, spatial filtering processing may be performed by weighting each array element, to enhance useful signals and suppress interference. In addition, a weighting factor of each array element may be changed according to change of a signal environment. Under an ideal condition, the adaptive beamforming technology may effectively suppress interference and retain desired signals, thereby maximizing an interferenceto-noise ratio of an output signal of an array.

2. The blind source separation algorithm

Blind source separation (BSS) means that the source signal is estimated only according to an observed mixed signal in a case that a source signal and a signal mixed parameter are unknown. Independent component analysis (ICA) is a new technology gradually developed to resolve the problem of blind signal separation. The method of independent component analysis is mainly used to resolve the blind signal separation, that is, a received mixed signal is decomposed into several independent components according to the principle of statistical independence by using an optimization algorithm, and such independent components are used as an approximate estimation of the source signal.

3. The deep learning-based speech separation algorithm

Speech separation based on deep learning mainly adopts the method based on deep learning to learn features of voice, a speaker, and noise, thereby achieving an objective of speech separation. To be specific, a multi-layer perception, a deep neural network (DNN), a convolutional neural network (CNN), a long short-term memory (LSTM) network, a generative adversarial network (GAN), or the like may be used. This is not limited herein.

In a case that speech enhancement is performed by using the GAN, a generator is usually implemented by convolution layers in a model, to reduce training parameters, thereby shortening the training time. A discriminator is responsible for providing authenticity information of generated data to the generator, and helping the generator to slightly adjust to "generating a clean sound".

In addition, in an embodiment of the present disclosure, the manner of signal separation based on the control signal is provided. In the foregoing manner, the adaptive beamforming algorithm is also used during the signal separation in a case that the control signal is generated by using the adaptive beamforming algorithm, the blind source separation algorithm is also used during the signal separation in a case that the control signal is generated by using the blind source separation algorithm, and the deep learning-based speech separation algorithm is also used during the signal separation in a case that the control signal is generated by using the deep learning-based speech separation algorithm. In this way, the control signal can better coordinate separation of signals, to achieve a better signal separation effect, thereby improving the accuracy of speech detection.

Based on the embodiment corresponding to FIG. 3, in another optional embodiment according to the embodiments of the present disclosure, the generating a speech detection result for the target detection sound region according to the output speech signal corresponding to the target detection sound region specifically includes the following steps:

determining a signal power corresponding to the target detection sound region according to the output speech signal corresponding to the target detection sound region, the signal power is a signal power of the output speech signal at a time-frequency point;

determining an estimated signal-to-noise ratio corresponding to the target detection sound region according to the signal power corresponding to the target detection sound region;

determining an output signal weighted value corresponding to the target detection sound region according to the estimated signal-to-noise ratio corresponding to the target detection sound region, the output signal weighted value being a weighted result of the output speech signal at the time-frequency point;

determining a target output speech signal corresponding to the target detection sound region according to the output signal weighted value corresponding to the target detection sound region and the output speech signal corresponding to the target detection sound region; and

determining the speech detection result corresponding to the target detection sound region according to the target output speech signal corresponding to the target detection sound region.

A manner of performing cross-channel post-processing on the output speech signal is described in this embodiment. Since the output speech signal after signal separation is not always clean, cross-channel post-processing may be performed in a case that an output speech signal corresponding to each pointing angle has a relatively high signal-to-noise ratio. The signal-to-noise ratio is considered to be high in a case that the signal-to-noise ratio of the output speech signal is higher than -5 decibels. However, a critical value of the signal-to-noise ratio may further be adjusted according to an actual situation, and "-5 decibels" is merely an example and is not be construed as a limitation on the present disclosure.

Each sound region is used as the target detection sound region, and an implementation of cross-channel post-processing includes: firstly, determining a signal power corresponding to the target detection sound region according to the output speech signal corresponding to the target detection sound region; then, calculating an estimated signal-to-noise ratio corresponding to the target detection sound region, and determining an output signal weighted value corresponding to the target detection sound region; and finally, determining a target output speech signal corresponding to the target detection sound region according to the output signal weighted value and the output speech signal corresponding to the target detection sound region, and determining a speech detection result corresponding to the target detection sound region based on the target output speech signal. Based on this, for ease of description, any one of the N sound regions is used as an example to make a description below, and a target output speech signal in another sound region is determined in a similar manner, which is not described herein. Any one of the N sound regions may be used as the target detection sound region, assuming that the sound region is an $i$ th sound region, a corresponding pointing angle is $\theta_i$ , and for each time-frequency point ($t, f$) of the pointing angle $\theta_i$ , an estimated signal-to-noise ratio of the $i$ th sound region may be calculated by using the following equation:

$$\mu_i(t,f) = \frac{P_i(t,f)}{\max\limits_{j=1,\ldots,N\,\&\,j\neq i} P_j(t,f)};$$

where

$\mu_i(t, f)$ represents an estimated signal-to-noise ratio of the $i$ th sound region, $P_i(t, f)$ represents a signal power of an output speech signal in a direction with the pointing angle $\theta_i$ at the time-frequency point ($t, f$), $N$ represents N sound regions (which may also represent N pointing angles), J represents a $j$ th sound region (which may also represent a $j$ th pointing angle), $i$ represents an $i$ th sound region (which may also represent an $i$ th pointing angle), $t$ represents a time, and $f$ represents a frequency.

Next, an output signal weighted value of the $i$th sound region is calculated below by using a formula of Wiener filtering:

$$g_i(t, f) = \sqrt{\frac{\mu_i(t, f)}{\mu_i(t, f) + 1}};$$

where

$g_i(t, f)$ represents an output signal weighted value of the $i$ th sound region, that is, a weight of the output speech signal in the direction with the pointing angle $\theta_i$ at the time-frequency point ($t, f$).

Finally, based on the output signal weighted value of the $i$ th sound region and the output speech signal of the $i$ th sound region, a target output speech signal of the $i$ th sound region may be calculated by using the following equation:

$$y_i(t, f) = x_i(t, f) * g_i(t, f);$$

where

$y_i(t, f)$ represents a target output speech signal of the $i$ th sound region, that is, a target output speech signal at the pointing angle $\theta_i$ calculated by using a cross-channel post-processing algorithm. $x_i(t, f)$ represents an output speech signal of the $i$ th sound region, that is, an output speech signal in the direction with the pointing angle $\theta_i$. It may be understood that, the target output speech signal $y_i(t, f)$ in this embodiment is an output speech signal on which noise reduction have not been performed.

In addition, in an embodiment of the present disclosure, the manner of performing cross-channel post-processing on the output speech signal is provided. In the foregoing manner, considering a correlation between different sound regions, speech signals may be better separated by performing cross-channel post-processing, and especially in a case that the signal-to-noise ratio is high enough, the purity of the speech signal may be improved, thereby further improving the quality of the output signal.

Based on the embodiment corresponding to FIG. 3, in another optional embodiment of the present disclosure, the determining a target output speech signal corresponding to the target detection sound region according to the output signal weighted value corresponding to the target detection sound region and the output speech signal corresponding to the target detection sound region specifically includes the following steps:

determining a to-be-processed output speech signal corresponding to the target detection sound region according to the output signal weighted value corresponding to the target detection sound region and the output speech signal corresponding to the target detection sound region; and

performing noise reduction on the to-be-processed output speech signal corresponding to the target detection sound region, to obtain the target output speech signal corresponding to the target detection sound region.

A manner of performing noise reduction on the to-be-processed output speech signal is described in this embodiment. For ease of description, any sound region one of the N sound regions is used as an example to make a description below, and a target output speech signal in another sound region is determined in a similar manner, which is not described herein. Any one of the N sound regions may be used as the target detection sound region, assuming that the sound region is an $i$ th sound region, a corresponding pointing angle is $\theta_i$. As can be seen from the foregoing embodiments that, the target output speech signal of the $i$ th sound region may be calculated according to the output signal weighted value of the $i$ th sound region and the output speech signal of the $i$ th sound region. However, in a case that noise reduction is required, based on the output signal weighted value of the $i$ th sound region and the output speech signal of the $i$ th sound region, a to-be-processed output speech signal of the $i$ th sound region may be calculated by using the following equation:

$$y_i'(t,f) = x_i(t,f) * g_i(t,f);$$

where

$y_i'(t, f)$ represents a to-be-processed output speech signal of the $i$ th sound region, that is, a to-be-processed output speech signal at the pointing angle $\theta_i$ calculated by using a cross-channel post-processing algorithm. $x_i(t, f)$ represents an output speech signal of the $i$ th sound region, that is, an output speech signal in the direction with the pointing angle $\theta_i$. It should be understood that, different from the foregoing embodiments, the to-be-processed output speech signal $y_i'(t, f)$ in this embodiment is an output speech signal on which noise reduction have not been performed, but the target output speech signal $y_i(t, f)$ in this embodiment is an output speech signal after noise reduction.

In view of this, noise reduction is performed on the to-be-processed output speech signal $y_i'(t, f)$, to obtain a target output speech signal $y_i(t, f)$ corresponding to each sound region.

A feasible filtering manner includes, noise reduction is performed by using a least mean square (LMS) adaptive filter, and the LMS adaptive filter automatically adjusts a current filter parameter by using a filter parameter obtained at a previous time instant, to adapt to unknown or randomly changed statistical characteristics of the signal and noise, thereby achieving optimal filtering. Another feasible filtering manner includes, noise reduction is performed by using an LMS adaptive notch filter, and the adaptive notch filter is adapted to monochromatic interference noise, for example, single frequency sine wave noise, and it is expected that notch filter has ideal characteristics, and the shoulder of the notch is arbitrarily narrow, which can immediately enter a flat region. Another feasible filtering manner includes, noise reduction is performed by using a basic spectral subtraction algorithm, since the to-be-processed output speech signal is not sensitive to a phase, phase information before spectral subtraction is used in a signal after spectral subtraction, and after an amplitude after spectral subtraction is calculated, a target output speech signal after spectral subtraction may be calculated by performing inverse fast Fourier transform (IFFT) with reference to a phase angle. Another feasible filtering manner includes noise reduction is performed through Wiener filtering. The foregoing examples are merely feasible solutions, and another noise reduction manner may also be adopted in actual application. This is not limited herein.

In addition, in an embodiment of the present disclosure, the manner of performing noise reduction on a to-be-processed output speech signal is described. In the foregoing manner, noise, interference human voice, and residual echo may be further suppressed, thereby better improving the quality of the target output speech signal and increasing the accuracy of speech detection.

Based on the embodiment corresponding to FIG. 3, in another optional embodiment of the present disclosure, the generating a speech detection result for the target detection sound region according to the output speech signal corresponding to the target detection sound region includes the following steps:

generating a first speech detection result in a case that the target output speech signal corresponding to the target detection sound region meets a human voice matching condition, the first speech detection result belonging to the speech detection result, and the first speech detection result indicating that the target output speech signal is a human voice signal; and

generating a second speech detection result in a case that the target output speech signal corresponding to the target detection sound region does not meet the human voice matching condition, the second speech detection result belonging to the speech detection result, and the second speech detection result indicating that the target output speech signal is a noise signal.

A manner of performing speech detection on each sound region is described in this embodiment. During the speech detection, whether the output speech signal corresponding to each sound region meets a human voice matching condition needs to be determined. The "target output speech signal" in this embodiment is obtained by performing cross-channel post-processing and noise reduction post-processing on the output speech signal. Speech detection is performed on the "output speech signal" in a case that the output speech signal has not been subjected to cross-channel post-processing and noise reduction post-processing. Speech detection may be performed on the "to-be-processed output speech signal" in a case that the output speech signal has been subject to only cross-channel post-processing without being subject to noise reduction post-processing. The "target output speech signal" is used as an example to describe the present disclosure, which shall not be construed as a limitation on the present disclosure.

How to determine whether the human voice matching condition is met based on the target output speech signal is described below. For ease of description, any one of the N sound regions is used as an example to make a description below, and a speech detection result in another sound region is determined in a similar manner, which is not described herein. Any one of the N sound regions may be used as the target detection sound region. During the detection, whether the sound region meets the human voice matching condition may be determined according to any one of the target output speech signal, the lip motion information, the user information, or the voiceprint, and the description is made below with reference to several examples.

First case: in a case that the target output speech signal is not received, that is, the user does not speak, it is determined that the human voice matching condition is not met.

Second case: in a case that the received target output speech signal is very weak or not like human voice, it may be determined that the user does not speak in a pointing angle direction corresponding the sound region in this case, and the human voice matching condition is not met.

Third case: in a case that the received target output speech signal is human voice that is extremely mismatched (for example, a matching score is less than 0.5) with voiceprint of given user information, it may be determined that, the user does not speak in a pointing angle direction corresponding the sound region in this case, the target output speech signal is a noise signal leaked from human voice in other directions to a local sound channel, and the human voice matching condition is not met.

Fourth case: in a case that the received target output speech signal is human voice, but the lip motion information indicates that the user does not have lip motion and a degree of voiceprint matching is not high, it may be also determined that the user does not speak in a pointing angle direction corresponding the sound region in this case, the target output speech signal is a noise signal leaked from human voice in other directions to a local sound channel, and the human voice matching condition is not met.

Corresponding voiceprint may be obtained from a database based on the user information (assuming that the user has registered with the user information), whether a target output speech signal in a current channel matches voiceprint of the user may be determined according to the voiceprint. In a case that the matching succeeds, it is determined that the human voice matching condition is met; and in a case that the matching fails, it may be determined that the target output speech signal is a noise signal leaked from human voice in other directions to a local sound channel, that is, the human voice matching condition is not met.

The foregoing four cases are merely examples, and in actual application, another determining manner may also be flexibly set according to situations. This is not limited herein. If it is determined that the target output speech signal meets the human voice matching condition, a first speech detection result indicating that the target output speech signal is a normal human voice signal is generated; and on the contrary, if it is determined that the target output speech signal does not meet the human voice matching condition, a second speech detection result indicating that the target output speech signal is a noise signal is generated.

In addition, in an embodiment of the present disclosure, the manner of performing speech detection on each sound region is provided. In the foregoing manner, whether the human voice matching condition is met needs to be determined for each sound region, and it is considered that the human voice matching condition is not met in a case that even if a user exists in some sound regions, the user does not speak or speaks in a very low voice, or identity information of the user does not match preset identity information. Therefore, in order to improve the accuracy of speech detection, whether the output speech signal corresponding to the sound region meets the human voice matching condition may be determined from multiple dimensions, thereby improving the feasibility and operability of the solution.

Based on the embodiment corresponding to FIG. 3, in another optional embodiment according to the embodiments of the present disclosure, after the generating a speech detection result for the target detection sound region according to the output speech signal corresponding to the target detection sound region, the method may further include the following steps:

determining a target sound region among M sound regions according to an output speech signal corresponding to each of the M sound regions in a case that a speech detection result corresponding to each of M sound regions is a first speech detection result, the first speech detection result indicating that the output speech signal is a human voice signal, the M sound regions belonging to the N sound regions, M being an integer greater than or equal to 1 and less than or equal to N; and

transmitting an output speech signal corresponding to the target sound region to a calling party.

A manner of calling based on a speech detection result is described in this embodiment. As can be seen from the foregoing embodiments that, a sound region corresponding to the first speech detection result is selected after a speech detection result corresponding to each of the N sound regions is obtained. This is because in a call scenario, it is necessary to transmit human voice and suppress noise to improve the call quality, where the first speech detection result indicates that the output speech signal of the sound region is a human voice signal. It is to be understood that the "output speech signal" in this embodiment may also be the "to-be-processed output speech signal" or the "target output speech signal", which can be flexibly selected in a specific processing process. The description herein is merely an example, and shall not be construed as a limitation on the present disclosure.

Assuming that speech detection results of M sound regions in N sound regions are first speech detection results, that is, the output speech signal (or the target output speech signal or the to-be-processed output speech signal) corresponding to each of the M sound regions. Based on this, a main speaker may further be determined based on output speech signals of the M sound regions, where each of the M sound regions is referred to as the "target sound region". For ease of description, referring to FIG. 6, FIG. 6 is another schematic architectural diagram of a multi-channel sound pickup system according to an embodiment of the present disclosure. As shown in the figure, the microphone array equipped on the terminal device may pick up an audio signal corresponding to each sound region, where the audio signal includes an input speech signal and a noise signal. A control signal corresponding to each sound region is generated by a signal separator, and suppression processing or retention processing is performed on an input speech signal of each pointing angle by using the control signal corresponding to each sound region, to obtain an output speech signal corresponding to the sound region. A speech detection result for each sound region is determined based on sound region information and the target output speech signal of the sound region.

A main speaker judging module determines a main speaker in real time according to output speech signals and sound region information of M sound regions, for example, in a case that a high demand is imposed on a delay of a judgment result, the main speaker judging module may directly measure an original volume of a speaker (a volume at a mouth) according to a signal strength of each speaker received in a short time period and the distance (which may be provided by a wide-angle camera or a multi-camera array) between the speaker and the microphone array, so that the main speaker is determined according to the original volume. In another example, in a case that a high demand is imposed on the delay of the judgment result, the main speaker may be determined according to a facial orientation of each speaker (for example, in a video conference scenario, a user whose face is facing the camera is more likely to be the main speaker). The judgment result of the main speaker includes an orientation and an identity of the main speaker, and the judgment result is outputted to a mixer for a call demand. The mixer merges N continuous audio streams into one or more channels of output audio according to the judgment result of the main speaker, to meet call requirements. In an implementation, in a case that the main speaker is determined to be in a direction with a pointing angle $\theta_i$, outputted single channel audio is equal to an output speech signal inputted in the first channel, and input data of another channel is directly discarded. In an implementation, in a case that the main speaker is determined to be in a direction with a pointing angle $\theta_i$ and in a direction with a pointing angle $\theta_4$, outputted audio is equal to the output speech signal inputted in the first channel and an output speech signal inputted in the fourth channel, and input data of another channel is directly discarded.

As can be seen from FIG. 6 that, cross-channel post-processing and noise reduction post-processing may further be performed on the output speech signal, to obtain a target output speech signal corresponding to each sound region, and a speech detection result for each sound region is determined based on the sound region information and the target output speech signal of the sound region.

Referring to FIG. 7, FIG. 7 is a schematic diagram of an interface of implementing calling by using a speech detection method based on multiple sound regions according to an embodiment of the present disclosure. As shown in the figure, using an example in which the method is applied to a call scenario, there are multiple users on the local side. Therefore, a main speaker may be determined by using the technical solutions according to the present disclosure, voice of the main speaker is transmitted to a user A, while voice of another speaker or noise may be suppressed, so that the user A can hear clearer voice.

In an embodiment of the present disclosure, the manner of calling based on a speech detection result is provided. In the foregoing manner, speech of each user may be separated and enhanced in real time in a multi-user scenario, so that high-quality call can be achieved in the call scenario according to the speech detection result and based on processes of multi-user parallel separation enhancement processing and post-mixed processing.

Based on the embodiment corresponding to FIG. 3, in another optional embodiment according to the embodiments of the present disclosure, after the generating a speech detection result for the target detection sound region according to the output speech signal corresponding to the target detection sound region, the method may further include the following steps:

determining a target sound region among M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belonging to the N sound regions, M being an integer greater than or equal to 1 and less than or equal to N; and

performing semantic recognition on an output speech signal corresponding to the target sound region, to obtain a semantic recognition result; and

generating dialog response information according to the semantic recognition result.

A manner of feeding back dialog response information based on the speech detection result is according to this embodiment. As can be seen from the foregoing embodiments that, a sound region corresponding to the first speech detection result is selected after the speech detection result corresponding to each of the N sound regions is obtained. This is because in an intelligent dialog scenario, it is necessary to transmit human voice and suppress noise to improve the accuracy of the intelligent dialog, where the first speech detection result indicates that the output speech signal of the sound region is a human voice signal. It is to be understood that the "output speech signal" in this embodiment may also be the "to-be-processed output speech signal" or the "target output speech signal", which may be flexibly selected in a specific processing process. The description herein is merely an example, and shall not be construed as a limitation on the present disclosure.

Assuming that speech detection results of the M sound regions among the N sound regions are first speech detection results, that is, the output speech signal (or the target output speech signal or the to-be-processed output speech signal) corresponding to each of the M sound regions. Based on this, a main speaker may further be judged based on output speech signals of the M sound regions, where each of the M sound regions is referred to as a "target sound region". For ease of description, referring to FIG. 8, FIG. 8 is another schematic architectural diagram of a multi-channel sound pickup system according to an embodiment of the present disclosure. As shown in the figure, the microphone array equipped on the terminal device may pick up an audio signal corresponding to each sound region, where the audio signal includes an input speech signal and a noise signal. A control signal corresponding to each sound region is generated by a signal separator, and suppression processing or retention processing is performed on an input speech signal of each pointing angle by using the control signal corresponding to the sound region, to obtain an output speech signal corresponding to each sound region. A speech detection result for each sound region is determined based on sound region information and the target output speech signal of the sound region.

Then, nature language processing (NLP) is performed on the output speech signal corresponding to each of the M sound regions, so that an intention of a speaker in the target sound region is obtained, that is, the semantic recognition result is obtained.

A main speaker judging module determines a main speaker in real time according to output speech signals and sound region information of M sound regions, for example, in a case that a high demand is imposed on a delay of a judgment result, the main speaker judging module may directly measure an original volume of a speaker (a volume at a mouth) according to a signal strength of each speaker received in a short time period and the distance (which may be provided by a wide-angle camera or a multi-camera array) between the speaker and the microphone array, so that the main speaker is determined according to the original volume. In another example, in a case that a high demand is imposed on the delay of the judgment result, the main speaker may be determined according to a semantic recognition result and a facial orientation of each speaker (for example, in a video conference scenario, a user whose face is facing the camera is more likely to be the main speaker). The judgment result of the main speaker includes an orientation and an identity of the main speaker, and the judgment result is used as a basis for generating dialog response information, to accordingly reply to dialog response information corresponding to the intention of the main speaker.

As can be seen from FIG. 8 that, cross-channel post-processing and noise reduction post-processing may further be performed on the output speech signal, to obtain a target output speech signal corresponding to each sound region, and a speech detection result for each sound region is determined based on the sound region information and the target output speech signal of the sound region.

Referring to FIG. 9, FIG. 9 is a schematic diagram of an interface of implementing dialog responding implemented by using a speech detection method based on multiple sound regions according to an embodiment of the present disclosure. As shown in the figure, using an example in which the method is applied to an intelligent dialog, assuming that there are multiple speakers on the local side, a main speaker may be determined by using the technical solutions according to the present disclosure, and according to the judgment result and the semantic recognition result of the main speaker, a reply is made to "Xiaoteng, what day is it today?" said by the main speaker, that is, dialog response information is generated, for example, "Hi, today is Friday".

In actual application, the method may further be applied to a scenario such as intelligent customer service, human-machine dialog, and the like, so that synchronous, real-time, and independent semantic analysis may be performed on each speaker, functions such as manually blocking or enabling may be performed on each speaker, and functions such as automatically blocking or enabling may be performed on each speaker.

In an embodiment of the present disclosure, the manner of feeding back dialog response information based on a speech detection result is provided. In the foregoing manner, speech of each user may be separated and enhanced in real time in a multi-user scenario, to determine a main speaker according to the speech detection result and the semantic recognition result in the intelligent dialog scenario, and improve the speech quality based on processes of multi-user parallel separation enhancement processing and post-mixed processing, so that dialog response information can be separately fed back according to the semantic recognition result, and non-interactive speech may be filtered.

Based on the embodiment corresponding to FIG. 3, in another optional embodiment according to the embodiments of the present disclosure, after the generating a speech detection result for the target detection sound region according to the output speech signal corresponding to the target detection sound region, the method may further include the following steps:

determining a target sound region among M sound regions according to an output speech signal corresponding to each of the M sound regions in a case that a speech detection result corresponding to each of the M sound regions is a first speech detection result, the first speech detection result indicating that the output speech signal is the human voice signal, the M sound regions belonging to the N sound regions, M being an integer greater than or equal to 1 and less than or equal to N; and

performing segmentation processing on an output speech signal corresponding to the target sound region, to obtain to-be-recognized audio data;

performing speech recognition on to-be-recognized audio data corresponding to the target sound region, to obtain a speech recognition result; and

generating text record information according to a speech recognition result corresponding to the target sound region, the text record information including at least one of translation text or conference record text.

A manner of generating text record information based on the speech detection result is according to this embodiment. As can be seen from the foregoing embodiments that, a sound region corresponding to the first speech detection result is selected after the speech detection result corresponding to each of the N sound regions is obtained. This is because in a translation or record scenario, it is necessary to transmit human voice and suppress noise to improve the accuracy of translation or record, where the first speech detection result indicates that the output speech signal of the sound region is a human voice signal. It is to be understood that the "output speech signal" in this embodiment may also be the "to-be-processed output speech signal" or the "target output speech signal", which may be flexibly selected in a specific processing process. The description herein is merely an example, and shall not be construed as a limitation on the present disclosure.

Assuming that speech detection results of the M sound regions among the N sound regions are first speech detection results, that is, the output speech signal (or the target output speech signal or the to-be-processed output speech signal) corresponding to each of the M sound regions. Based on this, a main speaker may further be judged based on output speech signals of the M sound regions, where each of the M sound regions is referred to as a "target sound region". For ease of description, referring to FIG. 10, FIG. 10 is another schematic architectural diagram of a multi-channel sound pickup system according to an embodiment of the present disclosure. As shown in the figure, the microphone array equipped on the terminal device may pick up an audio signal corresponding to each sound region, where the audio signal includes an input speech signal and a noise signal. A control signal corresponding to each sound region is generated by a signal separator, and suppression processing or retention processing is performed on an input speech signal of each pointing angle by using the control signal corresponding to the sound region, to obtain an output speech signal corresponding to each sound region. A speech detection result for each sound region is determined based on sound region information and the target output speech signal of the sound region.

Then, an output speech signal corresponding to each of the M sound regions is segmented, that is, a stop position of each output speech signal is determined, to obtain to-be-recognized audio data. In addition, each piece of to-be-recognized audio data carries user information, where the user information may be a user identifier. The to-be-recognized audio data and the user information are both used for subsequent speech recognition tasks. Then, to-be-recognized audio data corresponding to each of the M sound regions serving as the target sound region is processed by using the ASR technology, so that speech content of a speaker in the target sound region is obtained, that is, a speech recognition result is obtained.

A main speaker judging module determines a main speaker in real time according to output speech signals and sound region information of M sound regions, for example, in a case that a high demand is imposed on a delay of a judgment result, the main speaker judging module may directly measure an original volume of a speaker (a volume at a mouth) according to a signal strength of each speaker received in a short time period and the distance (which may be provided by a wide-angle camera or a multi-camera array) between the speaker and the microphone array, so that the main speaker is determined according to the original volume. In another example, in a case that a high demand is imposed on the delay of the judgment result, the main speaker may be determined according to a speech recognition result and a facial orientation of each speaker (for example, in a video conference scenario, a user whose face is facing the camera is more likely to be the main speaker). The judgment result of the main speaker includes an orientation and an identity of the main speaker, and the judgment result is used as a basis for generating text record information, to accordingly display dialog response information, where the text record information includes at least one of translation text or conference record text.

It may be understood that, by using the ASR technology, the segmented to-be-recognized audio data may be transmitted together with voiceprint to an ASR module in a cloud which is in a conventional manner or in a form of a machine learning model. Generally, a voiceprint identifier or a voiceprint model parameter is sent to the ASR module in the cloud, so that the ASR module may further improve a recognition rate of the module by using voiceprint information.

As can be seen from FIG. 10 that, cross-channel post-processing and noise reduction post-processing may further be performed on the output speech signal, to obtain a target output speech signal corresponding to each sound region, and a speech detection result for the sound region is determined based on the sound region information and the target output speech signal of the sound region. In addition, an object of a speech signal to be segmented is a target output speech signal corresponding to each target sound region.

Referring to FIG. 11, FIG. 11 is a schematic diagram of implementing text recording by using a speech detection method based on multiple sound regions according to an embodiment of the present disclosure. As shown in the figure, using an example in which the method is applied to a simultaneous interpretation scenario, assuming that there are multiple speakers on the local side, a main speaker may be determined by using the technical solutions according to the present disclosure, and a paragraph said by the main speaker may be interpreted in real time according to a judgment result and a speech recognition result of the main speaker. For example, the main speaker is a user A, and the user A says that "本次会议的主要内容是将让大家能够更好的了解今年的工作目标，提升工作效率". In this case, the text record information may be displayed in real time, for example, "The main content of this meeting is to let everyone have a better understanding of this year’s work objectives and improve work efficiency".

In actual application, the method may further be applied to a scenario such as translation, conference record, conference assistant, and the like, so that synchronous, real-time, and independent speech recognition (for example, complete conference transcription) may be performed on each speaker, functions such as manually blocking or enabling may be performed on each speaker, and functions such as automatically blocking or enabling may be performed on each speaker.

In this embodiment of the present disclosure, the manner of generating text record information based on the speech detection result is provided. In the foregoing manner, speech of each user may be separated and enhanced in real time in a multi-user scenario, so that starting and ending time points of each speaker may be accurately distinguished according to the speech detection result and the speech recognition result in the intelligent dialog scenario; speech of each speaker is separately recognized, to achieve more accurate speech recognition performance for subsequent semantic understanding performance and translation performance; and the speech quality is improved based on processes of multi-user parallel separation enhancement processing and post-mixed processing, thereby improving the accuracy of the text record information.

The speech detection apparatus according to the present disclosure is described in detail below. Referring to FIG. 12, FIG. 12 is a schematic diagram of an embodiment of a speech detection apparatus according to an embodiment of the present disclosure. The speech detection apparatus 20 includes:

an obtaining module 201, configured to obtain, for each of N sound regions, sound region information corresponding to the sound region, the sound region information including a sound region identifier, a pointing angle, and user information, the sound region identifier identifying the sound region, the pointing angle indicating a central angle of the sound region, the user information indicating a user retention situation in the sound region, N being an integer greater than 1;

a generation module 202, configured to use, for each of N sound regions, the sound region as a target detection sound region, and generate a control signal corresponding to the target detection sound region according to sound region information corresponding to the target detection sound region, the control signal being used for performing suppression processing or retention processing on an input speech signal, the control signal and the sound region being in a one-to-one correspondence; and

a processing module 203, configured to process an input speech signal corresponding to the target detection sound region by using the control signal corresponding to the target detection sound region, to obtain an output speech signal corresponding to the target detection sound region, the control signal, the input speech signal, and the output speech signal being in a one-to-one correspondence;

the generation module 202 being further configured to generate a speech detection result for the target detection sound region according to the output speech signal corresponding to the target detection sound region.

Based on the embodiment corresponding to FIG. 12, in another embodiment of the speech detection apparatus 20 according to this embodiment of the present disclosure:

the obtaining module 201 is further configured to: for each of the N sound regions, detect the sound region, to obtain a user detection result corresponding to the sound region;

for each of the N sound regions, use the sound region as the target detection sound region, and determine user information corresponding to the target detection sound region according to a user detection result corresponding to the target detection sound region;

determine lip motion information corresponding to the target detection sound region according to the user detection result corresponding to the target detection sound region;

obtain a sound region identifier corresponding to the target detection sound region and a pointing angle corresponding to the target detection sound region; and

generate the sound region information corresponding to the target detection sound region according to the user information corresponding to the target detection sound region, the lip motion information corresponding to the target detection sound region, the sound region identifier corresponding to the target detection sound region, and the pointing angle corresponding to the target detection sound region.

Based on the embodiment corresponding to FIG. 12, in another embodiment of the speech detection apparatus 20 according to this embodiment of the present disclosure:

the obtaining module 201 is further configured to: determine a first identity as the user information in a case that the user detection result corresponding to the target detection sound region indicates that a recognizable user exists in the target detection sound region;

determine a second identity as the user information in a case that the user detection result corresponding to the target detection sound region indicates that no user exists in the target detection sound region; and

determine a third identity as the user information in a case that the user detection result corresponding to the target detection sound region indicates that an unknown user exists in the target detection sound region; and

the obtaining module 201 is further configured to: determine a first motion identifier as the lip motion information in a case that the user detection result corresponding to the target detection sound region indicates that a user with lip motion exists in the target detection sound region;

determine a second motion identifier as the lip motion information in a case that the user detection result corresponding to the target detection sound region indicates that a user exists in the target detection sound region and the user does not have lip motion; and

determine a third motion identifier as the lip motion information in a case that the user detection result corresponding to the target detection sound region indicates that no user exists in the target detection sound region.

Based on the embodiment corresponding to FIG. 12, in another embodiment of the speech detection apparatus 20 according to this embodiment of the present disclosure:

the generation module 202 is further configured to: generate a first control signal in a case that user information corresponding to the target detection sound region indicates that no user exists in the target detection sound region, the first control signal belonging to the control signal, and the first control signal being used for performing suppression processing on the input speech signal; and

generate a second control signal in a case that the user information corresponding to the target detection sound region indicates that a user exists in the target detection sound region, the second control signal belonging to the control signal, and the second control signal being used for performing retention processing on the input speech signal.

Based on the embodiment corresponding to FIG. 12, in another embodiment of the speech detection apparatus 20 according to this embodiment of the present disclosure:

the generation module 202 is further configured to: generate a first control signal in a case that user information corresponding to the target detection sound region indicates that no user exists in the target detection sound region, the first control signal belonging to the control signal, and the first control signal being used for performing suppression processing on the input speech signal;

generate the first control signal in a case that the user information corresponding to the target detection sound region indicates that a user exists in the target detection sound region and the user does not have lip motion;

generate a second control signal in a case that the user information corresponding to the target detection sound region indicates that a user exists in the target detection sound region and the user has lip motion, the second control signal belonging to the control signal, and the second control signal being used for performing retention processing on the input speech signal; and

generate the first control signal or the second control signal according to an original audio signal in a case that the user information corresponding to the target detection sound region indicates that a user exists in the target detection sound region and a lip motion situation of the user is unknown.

Based on the embodiment corresponding to FIG. 12, in another embodiment of the speech detection apparatus 20 according to this embodiment of the present disclosure:

the generation module 202 is further configured to generate the control signal corresponding to the target detection sound region according to the sound region information corresponding to the target detection sound region by using a preset algorithm, the preset algorithm being an adaptive beamforming algorithm, a blind source separation algorithm, or a deep learning-based speech separation algorithm; and

the processing module 203 is further configured to: process, in a case that the preset algorithm is the adaptive beamforming algorithm, the input speech signal corresponding to the target detection sound region according to the control signal corresponding to the target detection sound region by using the adaptive beamforming algorithm, to obtain the output speech signal corresponding to the target detection sound region;

process, in a case that the preset algorithm is the blind source separation algorithm, the input speech signal corresponding to the target detection sound region according to the control signal corresponding to the target detection sound region by using the blind source separation algorithm, to obtain the output speech signal corresponding to the target detection sound region; and

process, in a case that the preset algorithm is the deep learning-based speech separation algorithm, the input speech signal corresponding to the target detection sound region according to the control signal corresponding to the target detection sound region by using the deep learning-based speech separation algorithm, to obtain the output speech signal corresponding to the target detection sound region.

Based on the embodiment corresponding to FIG. 12, in another embodiment of the speech detection apparatus 20 according to this embodiment of the present disclosure:

the generation module 202 is further configured to: determine a signal power corresponding to the target detection sound region according to the output speech signal corresponding to the target detection sound region, the signal power is a signal power of the output speech signal at a time-frequency point;

determine an estimated signal-to-noise ratio corresponding to the target detection sound region according to the signal power corresponding to the target detection sound region;

determine an output signal weighted value corresponding to the target detection sound region according to the estimated signal-to-noise ratio corresponding to the target detection sound region, the output signal weighted value being a weighted result of the output speech signal at the time-frequency point;

determine a target output speech signal corresponding to the target detection sound region according to the output signal weighted value corresponding to the target detection sound region and the output speech signal corresponding to the target detection sound region; and

determine the speech detection result corresponding to the target detection sound region according to the target output speech signal corresponding to the target detection sound region.

Based on the embodiment corresponding to FIG. 12, in another embodiment of the speech detection apparatus 20 according to this embodiment of the present disclosure:

the generation module 202 is further configured to: determine a to-be-processed output speech signal corresponding to the target detection sound region according to the output signal weighted value corresponding to the target detection sound region and the output speech signal corresponding to the target detection sound region; and perform noise reduction on the to-be-processed output speech signal corresponding to the target detection sound region, to obtain the target output speech signal corresponding to the target detection sound region.

Based on the embodiment corresponding to FIG. 12, in another embodiment of the speech detection apparatus 20 according to this embodiment of the present disclosure:

the generation module 202 is further configured to: generate a first speech detection result in a case that the target output speech signal corresponding to the target detection sound region meets a human voice matching condition, the first speech detection result belonging to the speech detection result, and the first speech detection result indicating that the target output speech signal is a human voice signal; and

generate a second speech detection result in a case that the target output speech signal corresponding to the target detection sound region does not meet the human voice matching condition, the second speech detection result belonging to the speech detection result, and the second speech detection result indicating that the target output speech signal is a noise signal.

Based on the embodiment corresponding to FIG. 12, in another embodiment of the speech detection apparatus 20 according to the embodiments of the present disclosure, the speech detection apparatus 20 further includes a determining module 204 and a transmission module 205, where

the determining module 204 is configured to: after the generating, by the generation module 202, a speech detection result for the target detection sound region according to the output speech signal corresponding to the target detection sound region, determine a target sound region among the M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belong to the N sound regions, M being an integer greater than or equal to 1 and less than or equal to N; and

the transmission module 205 is configured to transmit an output speech signal corresponding to the target sound region to a calling party.

Based on the embodiment corresponding to FIG. 12, in another embodiment of the speech detection apparatus 20 according to the embodiments of the present disclosure, the speech detection apparatus 20 further includes a determining module 204 and a recognition module 206, where

the determining module 204 is configured to: after the generating, by the generation module 202, a speech detection result for the target detection sound region according to the output speech signal corresponding to the target detection sound region, determine a target sound region among M sound regions according to an output speech signal corresponding to each sound region in the M sound regions in a case a speech detection result corresponding to each of the M sound regions is a first speech detection result, the first speech detection result indicating that the output speech signal is a human voice signal, the M sound regions belong to the N sound regions, M being an integer greater than or equal to 1 and less than or equal to N; and

the recognition module 206 is configured to perform semantic recognition on an output speech signal corresponding to the target sound region, to obtain a semantic recognition result; and

the generation module 202 is further configured to generate dialog response information according to the semantic recognition result.

Based on the embodiment corresponding to FIG. 12, in another embodiment of the speech detection apparatus 20 according to the embodiments of the present disclosure, the speech detection apparatus 20 further includes a determining module 204 and a recognition module 206, where

the determining module 204 is configured to: after the generating, by the generation module 202, a speech detection result for the target detection sound region according to the output speech signal corresponding to the target detection sound region, determine a target sound region among M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belong to the N sound regions, M being an integer greater than or equal to 1 and less than or equal to N; and

the processing module 203 is configured to perform segmentation processing on an output speech signal corresponding to the target sound region, to obtain to-be-recognized audio data;

the recognition module 206 is configured to perform speech recognition on to-be-recognized audio data corresponding to the target sound region, to obtain a speech recognition result; and

the generation module 202 is further configured to generate text record information according to a speech recognition result corresponding to the target sound region, the text record information including at least one of translation text or conference record text.

FIG. 13 is a schematic structural diagram of a computer device 30 according to an embodiment of the present disclosure. The computer device 30 may include an input device 310, an output device 320, a processor 330, and a memory 340. The output device in this embodiment of the present disclosure may be a display device. The memory 340 may include a ROM and a RAM, and provides an instruction and data to the processor 330. A part of the memory 340 may further include a non-volatile random access memory (NVRAM).

The memory 340 stores the following elements, executable modules or data structures, or a subset thereof, or an extended set thereof:

operation instructions: including various operation instructions, used for implementing various operations; and

an operating system: including various system programs, used for implementing various fundamental services and processing hardware-based tasks.

In this embodiment of the present disclosure, the processor 330 is configured to:

obtain, for each of N sound regions, sound region information corresponding to the sound region, the sound region information including a sound region identifier, a pointing angle, and user information, the sound region identifier identifying the sound region, the pointing angle indicating a central angle of the sound region, the user information indicating a user retention situation in the sound region, N being an integer greater than 1;

use, for each of the N sound regions, the sound region as a target detection sound region, and generate a control signal corresponding to the target detection sound region according to sound region information corresponding to the target detection sound region, the control signal being used for performing suppression processing or retention processing on an input speech signal, the control signal and the sound region being in a one-to-one correspondence;

process an input speech signal corresponding to the target detection sound region by using the control signal corresponding to the target detection sound region, to obtain an output speech signal corresponding to the target detection sound region, the control signal, the input speech signal, and the output speech signal being in a one-to-one correspondence; and

generate a speech detection result for the target detection sound region according to the output speech signal corresponding to the target detection sound region.

The processor 330 controls an operation of the computer device 30, and the processor 330 may also be referred to as a central processing unit (CPU). The memory 340 may include a ROM and a RAM, and provides an instruction and data to the processor 330. A part of the memory 340 may further include an NVRAM. During specific application, all components of the computer device 30 are coupled by using a bus system 350, and besides a data bus, the bus system 350 may further include a power source bus, a control bus, a state signal bus, and the like. However, for clear description, various types of buses in the figure are marked as the bus system 350.

The method disclosed in the foregoing embodiments of the present disclosure may be applied to the processor 330, or may be implemented by the processor 330. The processor 330 may be an integrated circuit chip, having a capability of processing a signal. In an implementation process, steps in the foregoing methods can be implemented by using a hardware integrated logical circuit in the processor 330, or by using instructions in a form of software. The foregoing processor 330 may be a general purpose processor, a digital signal processor (DSP), an application-specific integrated circuit (ASIC), a field-programmable gate array (FPGA) or another programmable logic device, a discrete gate or a transistor logic device, or a discrete hardware component. The processor may implement or perform the methods, the steps, and logic block diagrams that are disclosed in the embodiments of the present disclosure. The general-purpose processor may be a microprocessor, or the processor may be any conventional processor and the like. The steps of the methods disclosed with reference to the embodiments of the present disclosure may be directly performed and completed by using a hardware decoding processor, or may be performed and completed by using a combination of hardware and software modules in the decoding processor. The software module may be stored in a storage medium that is mature in the art, such as a random access memory (RAM), a flash memory, a read-only memory (ROM), a programmable ROM, an electrically erasable programmable memory, or a sound region. The storage medium is located in the memory 340, and the processor 330 reads information in the memory 340 and completes the steps in the foregoing methods in combination with hardware of the processor. For related descriptions of FIG. 13, refer to the related descriptions and effects of the method in FIG. 3. Details are not further described herein.

An embodiment of the present disclosure further provides a computer-readable storage medium, the computer-readable storage medium storing a computer program, the computer program, when run on a computer, causing the computer to perform the method described in the foregoing embodiments.

An embodiment of the present disclosure further provides a computer program product including a program, the program, when being executed on a computer, causing the computer to perform the method described in the foregoing embodiments.

## Claims

1. A speech detection method based on multiple sound regions, performed by a computer device, the method comprising:

   obtaining (101), for each of N sound regions, sound region information corresponding to the sound region, the sound region information comprising a sound region identifier, a pointing angle, and user information, the sound region identifier identifying the sound region, the pointing angle indicating a central angle of the sound region, the user information indicating a user retention situation in the sound region, N being an integer greater than 1;
   using (102), for each of the N sound regions, the sound region as a target detection sound region, and generating a control signal corresponding to the target detection sound region according to sound region information corresponding to the target detection sound region, the control signal being used for performing suppression processing or retention processing on an input speech signal, the control signal and the sound region being in a one-to-one correspondence;
   processing (103) an input speech signal corresponding to the target detection sound region by using the control signal corresponding to the target detection sound region, to obtain an output speech signal corresponding to the target detection sound region, the control signal, the input speech signal, and the output speech signal being in a one-to-one correspondence; and
   generating (104) a speech detection result for the target detection sound region according to the output speech signal corresponding to the target detection sound region,
   wherein the obtaining, for each of N sound regions, sound region information corresponding to the sound region comprises:

      for each of the N sound regions, detecting the sound region, to obtain a user detection result corresponding to the sound region;
      for each of the N sound regions, using the sound region as the target detection sound region, and determining user information corresponding to the target detection sound region according to a user detection result corresponding to the target detection sound region;
      determining lip motion information corresponding to the target detection sound region according to the user detection result corresponding to the target detection sound region;
      obtaining a sound region identifier corresponding to the target detection sound region and a pointing angle corresponding to the target detection sound region; and
      generating the sound region information corresponding to the target detection sound region according to the user information corresponding to the target detection sound region, the lip motion information corresponding to the target detection sound region, the sound region identifier corresponding to the target detection sound region, and the pointing angle corresponding to the target detection sound region; and

   wherein the generating a control signal corresponding to the target detection sound region according to sound region information corresponding to the target detection sound region comprises:

      generating a first control signal in a case that the user information corresponding to the target detection sound region indicates that no user exists in the target detection sound region, the first control signal belonging to the control signal, and the first control signal being used for performing suppression processing on the input speech signal; and
      generating the first control signal in a case that the user information corresponding to the target detection sound region indicates that a user exists in the target detection sound region and the user does not have lip motion;
      generating a second control signal in a case that the user information corresponding to the target detection sound region indicates that a user exists in the target detection sound region and the user has lip motion, the second control signal belonging to the control signal, and the second control signal being used for performing retention processing on the input speech signal; and
      generating the first control signal or the second control signal according to an original audio signal in a case that the user information corresponding to the target detection sound region indicates that a user exists in the target detection sound region and a lip motion situation of the user is unknown.

**2.** The speech detection method according to claim 1, wherein the determining user information corresponding to the target detection sound region according to a user detection result corresponding to the target detection sound region comprises:

determining a first identity as the user information in a case that the user detection result corresponding to the target detection sound region indicates that a recognizable user exists in the target detection sound region;
determining a second identity as the user information in a case that the user detection result corresponding to the target detection sound region indicates that no user exists in the target detection sound region; and
determining a third identity as the user information in a case that the user detection result corresponding to the target detection sound region indicates that an unknown user exists in the target detection sound region; and
the determining lip motion information corresponding to the target detection sound region according to the user detection result corresponding to the target detection sound region comprises:

determining a first motion identifier as the lip motion information in a case that the user detection result corresponding to the target detection sound region indicates that a user with lip motion exists in the target detection sound region;
determining a second motion identifier as the lip motion information in a case that the user detection result corresponding to the target detection sound region indicates that a user exists in the target detection sound region and the user does not have lip motion; and
determining a third motion identifier as the lip motion information in a case that the user detection result corresponding to the target detection sound region indicates that no user exists in the target detection sound region.

**3.** The speech detection method according to claim 1, wherein the generating a control signal corresponding to the target detection sound region according to sound region information corresponding to the target detection sound region comprises:

generating a first control signal in a case that user information corresponding to the target detection sound region indicates that no user exists in the target detection sound region, the first control signal belonging to the control signal, and the first control signal being used for performing suppression processing on the input speech signal; and
generating a second control signal in a case that the user information corresponding to the target detection sound region indicates that a user exists in the target detection sound region, the second control signal belonging to the control signal, and the second control signal being used for performing retention processing on the input speech signal.

**4.** The speech detection method according to claim 1, wherein the generating a control signal corresponding to the target detection sound region according to sound region information corresponding to the target detection sound region comprises:

generating the control signal corresponding to the target detection sound region according to the sound region information corresponding to the target detection sound region by using a preset algorithm, the preset algorithm being an adaptive beamforming algorithm, a blind source separation algorithm, or a deep learning-based speech separation algorithm; and
the processing an input speech signal corresponding to the target detection sound region by using the control signal corresponding to the target detection sound region, to obtain an output speech signal corresponding to the target detection sound region comprises:

processing, in a case that the preset algorithm is the adaptive beamforming algorithm, the input speech signal corresponding to the target detection sound region according to the control signal corresponding to the target detection sound region by using the adaptive beamforming algorithm, to obtain the output speech signal corresponding to the target detection sound region;
processing, in a case that the preset algorithm is the blind source separation algorithm, the input speech signal corresponding to the target detection sound region according to the control signal corresponding to the target detection sound region by using the blind source separation algorithm, to obtain the output speech signal corresponding to the target detection sound region; and
processing, in a case that the preset algorithm is the deep learning-based speech separation algorithm, the input speech signal corresponding to the target detection sound region according to the control signal corresponding to the target detection sound region by using the deep learning-based speech separation algorithm, to obtain the output speech signal corresponding to the target detection sound region.

**5.** The speech detection method according to claim 1, wherein the generating a speech detection result for the target detection sound region according to the output speech signal corresponding to the target detection sound region comprises:

determining a signal power corresponding to the target detection sound region according to the output speech signal corresponding to the target detection sound region, the signal power is a signal power of the output speech signal at a time-frequency point;
determining an estimated signal-to-noise ratio corresponding to the target detection sound region according to the signal power corresponding to the target detection sound region;
determining an output signal weighted value corresponding to the target detection sound region according to the estimated signal-to-noise ratio corresponding to the target detection sound region, the output signal weighted value being a weighted result of the output speech signal at the time-frequency point;
determining a target output speech signal corresponding to the target detection sound region according to the output signal weighted value corresponding to the target detection sound region and the output speech signal corresponding to the target detection sound region; and
determining the speech detection result corresponding to the target detection sound region according to the target output speech signal corresponding to the target detection sound region.

**6.** The speech detection method according to claim 5, wherein the determining a target output speech signal corresponding to the target detection sound region according to the output signal weighted value corresponding to the target detection sound region and the output speech signal corresponding to the target detection sound region comprises:

determining a to-be-processed output speech signal corresponding to the target detection sound region according to the output signal weighted value corresponding to the target detection sound region and the output speech signal corresponding to the target detection sound region; and
performing noise reduction on the to-be-processed output speech signal corresponding to the target detection sound region, to obtain the target output speech signal corresponding to the target detection sound region.

**7.** The speech detection method according to claim 6, wherein the generating a speech detection result for the target detection sound region according to the output speech signal corresponding to the target detection sound region comprises:

generating a first speech detection result in a case that the target output speech signal corresponding to the target detection sound region meets a human voice matching condition, the first speech detection result belonging to the speech detection result, and the first speech detection result indicating that the target output speech signal is a human voice signal; and
generating a second speech detection result in a case that the target output speech signal corresponding to the target detection sound region does not meet the human voice matching condition, the second speech detection result belonging to the speech detection result, and the second speech detection result indicating that the target output speech signal is a noise signal.

**8.** The speech detection method according to any one of claims 1 to 7, wherein after the generating a speech detection result for the target detection sound region according to the output speech signal corresponding to the target detection sound region, the method further comprises:

determining a target sound region among M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belonging to the N sound regions, M being an integer greater than or equal to 1 and less than or equal to N; and
transmitting an output speech signal corresponding to the target sound region to a calling party.

9. The speech detection method according to any one of claims 1 to 7, wherein after the generating a speech detection result for the target detection sound region according to the output speech signal corresponding to the target detection sound region, the method further comprises:

determining a target sound region among M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belong to the N sound regions, M being an integer greater than or equal to 1 and less than or equal to N; and
performing semantic recognition on an output speech signal corresponding to the target sound region, to obtain a semantic recognition result; and
generating dialog response information according to the semantic recognition result.

10. The speech detection method according to any one of claims 1 to 7, wherein after the generating a speech detection result for the target detection sound region according to the output speech signal corresponding to the target detection sound region, the method further comprises:

determining a target sound region among M sound regions according to an output speech signal corresponding to each of the M sound regions in a case that a speech detection result corresponding to each of the M sound regions is a first speech detection result, the first speech detection result indicating that the output speech signal is a human voice signal, the M sound regions belonging to the N sound regions, M being an integer greater than or equal to 1 and less than or equal to N; and
performing segmentation processing on an output speech signal corresponding to the target sound region, to obtain to-be-recognized audio data;
performing speech recognition on to-be-recognized audio data corresponding to the target sound region, to obtain a speech recognition result; and
generating text record information according to a speech recognition result corresponding to the target sound region, the text record information comprising at least one of translation text or conference record text.

11. A computer device, comprising: a memory, a transceiver, a processor, and a bus system,

the memory being configured to store a program,
the processor being configured to execute the program in the memory, and perform the method according to any one of claims 1 to 10 according to instructions in program code; and
the bus system being configured to connect the memory and the processor, to cause the memory and the processor to perform communication.

12. A computer-readable storage medium comprising instructions, when run on a computer, the instructions causing the computer to perform the speech detection method according to any one of claims 1 to 10.

13. A computer program product, the computer program product, when executed, being configured to perform the method according to any one of claims 1 to 10.

## Patentansprüche

1. Verfahren zur Spracherkennung, das auf mehreren Schallregionen basiert und von einem Computer ausgeführt wird, wobei das Verfahren umfasst:

Erhalten (101) von Schallbereichsinformationen für jeden von N Schallbereichen, die dem Schallbereich entsprechen, wobei die Schallbereichsinformationen einen Schallbereichskennzeichner, einen Ausrichtungswinkel und Benutzerinformationen umfassen, wobei der Schallbereichskennzeichner den Schallbereich identifiziert, der Ausrichtungswinkel einen zentralen Winkel des Schallbereichs angibt und die Benutzerinformationen eine Benutzeraufenthaltssituation in dem Schallbereich angeben, wobei N eine ganze Zahl größer als 1 ist;
Verwenden (102) des Schallbereichs als Zielerfassungs-Schallbereich für jeden der N Schallbereiche und Erzeugen eines Steuersignals, das dem Zielerfassungs-Schallbereich entspricht, gemäß Schallregionsinformationen, die dem Zielerfassungs-Schallbereich entsprechen, wobei das Steuersignal zum Durchführen einer Unterdrückungsverarbeitung oder einer Rückhalteverarbeitung an einem Eingangssprachsignal verwendet wird, wobei das Steuersignal und der Schallbereich in einer 1:1-Entsprechung vorliegen;
Verarbeiten (103) eines Eingangssprachsignals, das dem Zielerfassungs-Schallbereich entspricht, unter Verwendung des Steuersignals, das dem Zielerfassungs-Schallbereich entspricht, um ein Ausgangssprachsignal zu erhalten, das dem Zielerfassungs-Schallbereich entspricht, wobei das Steuersignal, das Eingangssprachsignal und das Ausgangssprachsignal in einer 1:1-Entsprechung vorliegen; und
Erzeugen (104) eines Spracherkennungsergebnisses für den Zielerfassungs-Schallbereich gemäß dem Ausgangssprachsignal, das dem Zielerfassungs-Schallbereich entspricht,
wobei das Erhalten von Schallbereichsinformationen, die dem Schallbereich entsprechen, für jeden von N Schallbereichen umfasst:

Erfassen des Schallbereichs für jeden der N Schallbereiche, um ein Benutzererfassungsergebnis zu erhalten, das dem Schallbereich entspricht;
Verwenden des Schallbereichs als den Zielerfassungs-Schallbereich für jede der N Schallregionen und Bestimmen von Benutzerinformationen, die dem Zielerfassungs-Schallbereich entsprechen, gemäß einem Benutzer-Erfassungsergebnis, das dem Zielerfassungs-Schallbereich entspricht;
Bestimmen von Lippenbewegungsinformationen, die dem Zielerfassungs-Schallbereich entsprechen gemäß dem Benutzer-Erfassungsergebnis, das dem Zielerfassungs-Schallbereich entspricht;
Erhalten eines Schallbereich-Identifizierers, der dem Zielerfassungs-Schallbereich entspricht, und einen Zeigewinkel, der dem Zielerfassungs-Schallbereich entspricht; und
Erzeugen der Schallbereichsinformationen, die dem Zielerfassungs-Schallbereich entsprechen, gemäß der Benutzerinformationen, die dem Zielerfassungs-Schallbereich entsprechen, der Lippenbewegungsinformationen, die dem Zielerfassungs-Schallbereich entsprechen, dem Schallbereich-Identifizierer, der dem Zielerfassungs-Schallbereich entspricht, und dem Ausrichtungswinkel, der dem Zielerfassungs-Schallbereich entspricht; und
wobei das Erzeugen eines Steuersignals, das dem Zielerfassungs-Schallbereich entspricht, gemäß den Schallbereichsinformationen, die dem Zielerfassungs-Schallbereich entsprechen, umfasst:

Erzeugen eines ersten Steuersignals in einem Fall, in dem die Benutzerinformationen, die dem Zielerfassungs-Schallbereich entsprechen, anzeigen, dass kein Benutzer in dem Zielerfassungs-Schallbereich vorhanden ist, wobei das erste Steuersignal zu dem Steuersignal gehört und das erste Steuersignal zum Durchführen einer Unterdrückungsverarbeitung an dem Eingangssprachsignal verwendet wird; und
Erzeugen des ersten Steuersignals in einem Fall, in dem die Benutzerinformationen, die dem Zielerfassungs-Schallbereich entsprechen, anzeigen, dass ein Benutzer in dem Zielerfassungs-Schallbereich vorhanden ist und der Benutzer keine Lippenbewegung aufweist;
Erzeugen eines zweiten Steuersignals in einem Fall, in dem die Benutzerinformationen, die dem Zielerfassungs-Schallbereich entsprechen, anzeigen, dass ein Benutzer in dem Zielerfassungs-Schallbereich vorhanden ist und der Benutzer Lippenbewegung aufweist, wobei das zweite Steuersignal zu dem Steuersignal gehört und das zweite Steuersignal zum Durchführen einer Retentionsverarbeitung an dem Eingangssprachsignal verwendet wird; und
Erzeugen des ersten Steuersignals oder des zweiten Steuersignals gemäß einem ursprünglichen Audiosignal in einem Fall, in dem die Benutzerinformationen, die dem Zielerfassungs-Schallbereich entsprechen, anzeigen, dass ein Benutzer in dem Zielerfassungs-Schallbereich vorhanden ist und eine Lippenbewegungssituation des Benutzers unbekannt ist.

**2.** Verfahren zur Spracherkennung gemäß Anspruch 1, wobei das Bestimmen der Benutzerinformationen, die dem Zielerfassungs-Schallbereich entsprechen, gemäß einem Benutzererfassungsergebnis, das dem Zielerfassungs-Schallbereich entspricht, umfasst:

Bestimmen einer ersten Identität als die Benutzerinformationen in einem Fall, in dem das Benutzererkennungsergebnis entsprechend dem Zielerfassungs-Schallbereich anzeigt, dass ein erkennbarer Benutzer in dem Zielerfassungs-Schallbereich vorhanden ist;
Bestimmen einer zweiten Identität als die Benutzerinformationen in einem Fall, in dem das Benutzererkennungsergebnis, das dem Zielerfassungs-Schallbereich entspricht, anzeigt, dass kein Benutzer in dem Zielerfassungs-Schallbereich existiert; und
Bestimmen einer dritten Identität als die Benutzerinformationen in einem Fall, in dem das Benutzererkennungsergebnis, das dem Zielerfassungs-Schallbereich entspricht, anzeigt, dass ein unbekannter Benutzer in dem Zielerfassungs-Schallbereich existiert; und

das Bestimmen von Lippenbewegungsinformationen, die dem Zielerfassungs-Tonbereich entsprechen, gemäß dem Benutzererkennungsergebnis, das dem Zielerfassungs-Schallbereich entspricht, umfasst:

Bestimmen eines ersten Bewegungs-Identifizierers als die Lippenbewegungsinformationen in einem Fall, in dem das Benutzererkennungsergebnis, das dem Zielerfassungs-Schallbereich entspricht, anzeigt, dass ein Benutzer mit Lippenbewegung in dem Zielerfassungs-Schallbereich vorhanden ist;
Bestimmen eines zweiten Bewegungs-Identifizierers als Lippenbewegungsinformationen in einem Fall, in dem das Benutzererkennungsergebnis, das dem Zielerfassungs-Schallbereich entspricht, anzeigt, dass ein Benutzer in dem Zielerfassungs-Schallbereich vorhanden ist und der Benutzer keine Lippenbewegung aufweist; und
Bestimmen eines dritten Bewegungs-Identifizierers als Lippenbewegungsinformationen in einem Fall, in dem das Benutzererkennungsergebnis, das dem Zielerfassungs-Schallbereich entspricht, anzeigt, dass kein Benutzer in dem Zielerfassungs-Schallbereich vorhanden ist.

**3.** Verfahren zur Spracherkennung gemäß Anspruch 1, wobei das Erzeugen eines Steuersignals entsprechend dem Zielerfassungs-Schallbereich gemäß Schallbereichsinformationen entsprechend dem Zielerfassungs-Schallbereich umfasst:

Erzeugen eines ersten Steuersignals in einem Fall, in dem Benutzerinformationen, die dem Zielerfassungs-Schallbereich entsprechen, anzeigen, dass kein Benutzer in dem Zielerfassungs-Schallbereich vorhanden ist, wobei das erste Steuersignal zu dem Steuersignal gehört und das erste Steuersignal zum Durchführen einer Unterdrückungsverarbeitung an dem Eingangssprachsignal verwendet wird; und
Erzeugen eines zweiten Steuersignals in einem Fall, in dem die Benutzerinformationen, die dem Zielerfassungs-Schallbereich entsprechen, anzeigen, dass ein Benutzer in dem Zielerfassungs-Schallbereich vorhanden ist, wobei das zweite Steuersignal zu dem Steuersignal gehört und das zweite Steuersignal zum Durchführen einer Rückhalteverarbeitung an dem Eingangssprachsignal verwendet wird.

**4.** Verfahren zur Spracherkennung gemäß Anspruch 1, wobei das Erzeugen eines Steuersignals, das dem Zielerfassungs-Schallbereich entspricht, gemäß Schallbereichsinformationen, die dem Zielerfassungs-Schallbereich entsprechen, umfasst:

Erzeugen des Steuersignals, das dem Zielerfassungs-Schallbereich entspricht, gemäß der Schallbereichsinformationen, die dem Zielerfassungs-Schallbereich entsprechen, unter Verwendung eines voreingestellten Algorithmus, wobei der voreingestellte Algorithmus ein adaptive beamforming Algorithmus, ein blind signal separation Algorithmus oder ein auf Deep-Learning basierender Sprachtrennungsalgorithmus ist; und
die Verarbeitung eines Eingangssprachsignals, das dem Zielerfassungs-Schallbereich entspricht, unter Verwendung des Steuersignals, das dem Zielerfassungs-Schallbereich entspricht, um ein Ausgangssprachsignal zu erhalten, das dem Zielerfassungs-Schallbereich entspricht, umfasst:

Verarbeiten, in einem Fall, in dem der voreingestellte Algorithmus der adaptive beamforming Algorithmus ist, des Eingangssprachsignals, das dem Zielerfassungs-Schallbereich entspricht, gemäß dem Steuersignal, das dem Zielerfassungs-Schallbereich entspricht, unter Verwenden des adaptive beamforming Algorithmus, um das Ausgangssprachsignal zu erhalten, das dem Zielerfassungs-Schallbereich entspricht;
Verarbeiten, in einem Fall, in dem der voreingestellte Algorithmus der blind signal separation Algorithmus ist, des Eingangssprachsignals, das dem Zielerfassungs-Schallbereich entspricht, gemäß dem Steuersignal, das dem Zielerfassungs-Schallbereich entspricht, unter Verwenden des blind signal separation Algorithmus, um das Ausgangssprachsignal zu erhalten, das dem Zielerfassungs-Schallbereich entspricht; und
Verarbeiten, in einem Fall, in dem der voreingestellte Algorithmus der auf Deep-Learning basierende Sprachtrennungsalgorithmus ist, des Eingangssprachsignals, das dem Zielerfassungs-Schallbereich entspricht, gemäß dem Steuersignal, das dem Zielerfassungs-Schallbereich entspricht, unter Verwenden des auf Deep-Learning basierenden Sprachtrennungsalgorithmus, um das Ausgangssprachsignal zu erhalten, das dem Zielerfassungs-Schallbereich entspricht.

**5.** Verfahren zur Spracherkennung gemäß Anspruch 1, wobei das Erzeugen eines Spracherkennungsergebnisses für den Zielerfassungs-Schallbereich gemäß dem Ausgangssprachsignal, das dem Zielerfassungs-Schallbereich entspricht, umfasst:

Bestimmen einer Signalleistung, die dem Zielerfassungs-Schallbereich entspricht, gemäß dem Ausgangssprachsignal, das dem Zielerfassungs-Schallbereich entspricht, wobei die Signalleistung eine Signalleistung des Ausgangssprachsignals an einem Zeit-Frequenz-Punkt ist;
Bestimmen eines geschätzten Signal-Rausch-Verhältnisses, das dem Zielerfassungs-Schallbereich entspricht, gemäß der Signalleistung, die dem Zielerfassungs-Schallbereich entspricht;
Bestimmen eines gewichteten Ausgangssignalwerts, das dem Zielerfassungs-Schallbereich entspricht, gemäß dem geschätzten Signal-Rausch-Verhältnis, das dem Zielerfassungs-Schallbereich entspricht, wobei der gewichtete Ausgangssignalwert ein gewichtetes Ergebnis des Ausgangssprachsignals am Zeit-Frequenz-Punkt ist;
Bestimmen eines Ziel-Ausgangssprachsignals, das dem Zielerfassungs-Schallbereich entspricht, gemäß dem gewichteten Ausgangssignalwert, der dem Zielerfassungs-Schallbereich entspricht, und dem Ausgangssprachsignal, das dem Zielerfassungs-Schallbereich entspricht; und
Bestimmen des Spracherkennungsergebnisses, das dem Zielerfassungs-Schallbereich entspricht, gemäß dem Ziel-Ausgangssprachsignal, das dem Zielerfassungs-Schallbereich entspricht.

**6.** Verfahren zur Spracherkennung gemäß Anspruch 5, wobei das Bestimmen eines Ziel-Ausgangssprachsignals, das dem Zielerfassungs-Schallbereich entspricht, gemäß dem gewichteten Ausgangssprachsignalwert, der dem Zielerfassungs-Schallbereich entspricht, und dem Ausgangssprachsignal, das dem Zielerfassungs-Schallbereich entspricht, umfasst:

Bestimmen eines zu verarbeitenden Ausgangssprachsignals, das dem Zielerfassungs-Schallbereich entspricht, gemäß dem gewichteten Ausgangssignalwert, der dem Zielerfassungs-Schallbereich entspricht, und dem Ausgangssprachsignal, das dem Zielerfassungs-Schallbereich entspricht; und
Durchführen einer Rauschreduktion an dem zu verarbeitenden Ausgangssprachsignal, das dem Zielerfassungs-Schallbereich entspricht, um das Ziel-Ausgangssprachsignal, das dem Zielerfassungs-Schallbereich entspricht, zu erhalten.

**7.** Verfahren zur Spracherkennung gemäß Anspruch 6, wobei das Erzeugen eines Spracherkennungsergebnisses für den Zielerfassungs-Schallbereich gemäß dem Ausgangssprachsignal, das dem Zielerfassungs-Schallbereich entspricht, umfasst:

Erzeugen eines ersten Spracherkennungsergebnisses in einem Fall, in dem das Ziel-Ausgangssprachsignal, das dem Zielerfassungs-Schallbereich entspricht, eine Bedingung für die Übereinstimmung mit einer menschlichen Stimme erfüllt, wobei das erste Spracherkennungsergebnis zu dem Spracherkennungsergebnis gehört und das erste Spracherkennungsergebnis anzeigt, dass das Ziel-Ausgangssprachsignal ein Signal einer menschlichen Stimme ist; und
Erzeugen eines zweiten Spracherkennungsergebnisses in einem Fall, in dem das Ziel-Ausgangssprachsignal, das dem Zielerfassungs-Schallbereich entspricht, die Bedingung für die Übereinstimmung mit einer menschlichen Stimme nicht erfüllt, wobei das zweite Spracherkennungsergebnis zu dem Spracherkennungsergebnis gehört und das zweite Spracherkennungsergebnis anzeigt, dass das Ziel-Ausgangssprachsignal ein Rauschsignal ist.

**8.** Verfahren zur Spracherkennung gemäß einem der Ansprüche 1 bis 7, wobei nach dem Erzeugen eines Spracherkennungsergebnisses für den Zielerfassungs-Schallbereich gemäß dem Ausgangssprachsignal, das dem Zielerfassungs-Schallbereich entspricht, das Verfahren ferner umfasst:

Bestimmen eines Zielschallbereichs unter M Schallbereichen gemäß einem Ausgangssprachsignal, das jedem der M Schallbereiche entspricht, in einem Fall, in dem ein Spracherkennungsergebnis, das jedem der M Schallbereiche entspricht, ein erstes Spracherkennungsergebnis ist, wobei das erste Spracherkennungsergebnis anzeigt, dass das Ausgangssprachsignal ein menschliches Sprachsignal ist, wobei die M Schallbereiche zu den N Schallbereichen gehören, wobei M eine ganze Zahl größer oder gleich 1 und kleiner oder gleich N ist; und
Übertragen eines Ausgangssprachsignals, das dem Zielschallbereich entspricht, an einen anrufenden Teilnehmer.

**9.** Verfahren zur Spracherkennung gemäß einem der Ansprüche 1 bis 7, wobei das Verfahren nach dem Erzeugen eines Spracherkennungsergebnisses für den Zielerfassungs-Schallbereich gemäß dem Ausgangssprachsignal, das dem Zielerfassungs-Schallbereich entspricht, ferner umfasst:

Bestimmen eines Zielschallbereichs unter M Schallbereichen gemäß einem Ausgangssprachsignal, das jedem der M Schallbereiche entspricht, in einem Fall, in dem ein Spracherkennungsergebnis, das jedem der M Schallbereiche entspricht, ein erstes Spracherkennungsergebnis ist, wobei das erste Spracherkennungsergebnis anzeigt, dass das Ausgangssprachsignal ein menschliches Sprachsignal ist, wobei die M Schallbereiche zu den N Schallbereichen gehören, wobei M eine ganze Zahl größer oder gleich 1 und kleiner oder gleich N ist; und

Durchführen einer semantischen Erkennung an einem Ausgangssprachsignal, das dem Zielschallbereich entspricht, um ein semantisches Erkennungsergebnis zu erhalten; und

Erzeugen von Dialogantwortinformationen gemäß dem semantischen Erkennungsergebnis.

**10.** Verfahren zur Spracherkennung gemäß einem der Ansprüche 1 bis 7, wobei nach dem Erzeugen eines Spracherkennungsergebnisses für den Zielerfassungs-Schallbereich gemäß dem Ausgangssprachsignal, das dem Zielerfassungs-Schallbereich entspricht, das Verfahren ferner umfasst:

Bestimmen eines Zielschallbereichs unter M Schallbereichen gemäß einem Ausgangssprachsignal, das jedem der M Schallbereiche entspricht, in einem Fall, in dem ein Spracherkennungsergebnis, das jedem der M Schallbereiche entspricht, ein erstes Spracherkennungsergebnis ist, wobei das erste Spracherkennungsergebnis anzeigt, dass das Ausgangssprachsignal ein menschliches Sprachsignal ist, wobei die M Schallbereiche zu den N Schallbereichen gehören, wobei M eine ganze Zahl größer oder gleich 1 und kleiner oder gleich N ist; und

Durchführen einer Segmentierungsverarbeitung an einem Ausgangssprachsignal, das dem Zielschallbereich entspricht, um zu erkennende Audiodaten zu erhalten;

Durchführen einer Spracherkennung an zu erkennenden Audiodaten, die dem Zielschallbereich entsprechen, um ein Spracherkennungsergebnis zu erhalten; und

Erzeugen von Textaufzeichnungsinformationen gemäß einem Spracherkennungsergebnis, das dem Zielschallbereich entspricht, wobei die Textaufzeichnungsinformationen mindestens einen von Übersetzungstext oder Konferenzaufzeichnungstext umfassen.

**11.** Computervorrichtung, der aufweist: einen Speicher, einen Transceiver, einen Prozessor und ein Bussystem,

wobei der Speicher zum Speichern eines Programmes ausgebildet ist,

der Prozessor zum Ausführen des Programms in dem Speicher ausgebildet ist und zum Durchführen des Verfahrens gemäß einem beliebigen der Ansprüche 1 bis 10 gemäß Anweisungen in einem Programmcode; und

das Bussystem zum Verbinden des Speichers und des Prozessors ausgebildet ist, um den Speicher und den Prozessor zur Ausführung einer Kommunikation zu veranlassen.

**12.** Computerlesbares Speichermedium, das Anweisungen aufweist, die, wenn sie auf einem Computer ausgeführt werden, den Computer dazu veranlassen, das Spracherkennungsverfahren gemäß einem beliebigen der Ansprüche 1 bis 10 auszuführen.

**13.** Computerprogrammprodukt, wobei das Computerprogrammprodukt ausgebildet ist, das Verfahren gemäß einem beliebigen der Ansprüche 1 bis 10 durchzuführen, wenn es ausgeführt wird.

## Revendications

**1.** Procédé de détection de parole basé sur de multiples régions sonores et mis en œuvre par un dispositif informatique, le procédé comprenant:

obtenir (101), pour chacune de N régions sonores, des informations de région sonore correspondant à la région sonore, les informations de région sonore comprenant un identifiant de région sonore, un angle de pointage et des informations d'utilisateur, l'identifiant de région sonore identifiant la région sonore, l'angle de pointage indiquant un angle central de la région sonore, les informations d'utilisateur indiquant une situation de rétention d'utilisateur dans la région sonore, N étant un entier supérieur à 1;

utiliser (102), pour chacune des N régions sonores, la région sonore en tant que région sonore de détection cible, et générer un signal de commande correspondant à la région sonore de détection cible en fonction d'informations de région sonore correspondant à la région sonore de détection cible, le signal de commande étant utilisé pour effectuer un traitement de suppression ou un traitement de rétention sur un signal de parole d'entrée, le signal de commande et la région sonore étant dans une correspondance biunivoque;
traiter (103) un signal de parole d'entrée correspondant à la région sonore de détection cible en utilisant le signal de commande correspondant à la région sonore de détection cible, pour obtenir un signal de parole de sortie correspondant à la région sonore de détection cible, le signal de commande, le signal de parole d'entrée et le signal de parole de sortie étant dans une correspondance biunivoque; et
générer (104) un résultat de détection de parole pour la région sonore de détection cible en fonction du signal de parole de sortie correspondant à la région sonore de détection cible,
dans lequel l'obtention, pour chacune de N régions sonores, d'informations de région sonore correspondant à la région sonore comprend:

pour chacune des N régions sonores, détecter la région sonore afin d'obtenir un résultat de détection d'utilisateur correspondant à la région sonore;
pour chacune des N régions sonores, utiliser la région sonore en tant que région sonore de détection cible, et déterminer des informations d'utilisateur correspondant à la région sonore de détection cible en fonction d'un résultat de détection d'utilisateur correspondant à la région sonore de détection cible;
déterminer des informations de mouvement des lèvres correspondant à la région sonore de détection cible en fonction du résultat de détection d'utilisateur correspondant à la région sonore de détection cible;
obtenir un identifiant de région sonore correspondant à la région sonore de détection cible et un angle de pointage correspondant à la région sonore de détection cible; et
générer les informations de région sonore correspondant à la région sonore de détection cible en fonction des informations d'utilisateur correspondant à la région sonore de détection cible, des informations de mouvement des lèvres correspondant à la région sonore de détection cible, de l'identifiant de région sonore correspondant à la région sonore de détection cible et de l'angle de pointage correspondant à la région sonore de détection cible; et

dans lequel la génération d'un signal de commande correspondant à la région sonore de détection cible en fonction des informations de région sonore correspondant à la région sonore de détection cible comprend:

générer un premier signal de commande dans un cas où les informations d'utilisateur correspondant à la région sonore de détection cible indiquent qu'aucun utilisateur n'existe dans la région sonore de détection cible, le premier signal de commande appartenant au signal de commande, et le premier signal de commande étant utilisé pour effectuer un traitement de suppression sur le signal de parole d'entrée; et
générer le premier signal de commande dans un cas où les informations d'utilisateur correspondant à la région sonore de détection cible indiquent qu'un utilisateur existe dans la région sonore de détection cible et que l'utilisateur n'a pas de mouvement des lèvres;
générer un deuxième signal de commande dans un cas où les informations d'utilisateur correspondant à la région sonore de détection cible indiquent qu'un utilisateur existe dans la région sonore de détection cible et que l'utilisateur a un mouvement des lèvres, le deuxième signal de commande appartenant au signal de commande, et le deuxième signal de commande étant utilisé pour effectuer un traitement de rétention sur le signal de parole d'entrée; et
générer le premier signal de commande ou le deuxième signal de commande en fonction d'un signal audio d'origine dans un cas où les informations d'utilisateur correspondant à la région sonore de détection cible indiquent qu'un utilisateur existe dans la région sonore de détection cible et qu'une situation de mouvement des lèvres de l'utilisateur est inconnue.

**2.** Procédé de détection de parole selon la revendication 1, dans lequel la détermination d'informations d'utilisateur correspondant à la région sonore de détection cible en fonction d'un résultat de détection d'utilisateur correspondant à la région sonore de détection cible comprend:

déterminer une première identité en tant qu'informations d'utilisateur dans un cas où le résultat de détection d'utilisateur correspondant à la région sonore de détection cible indique qu'un utilisateur reconnaissable existe dans la région sonore de détection cible;
déterminer une deuxième identité en tant qu'informations d'utilisateur dans un cas où le résultat de détection d'utilisateur correspondant à la région sonore de détection cible indique qu'aucun utilisateur n'existe dans la région sonore de détection cible; et
déterminer une troisième identité en tant qu'informations d'utilisateur dans un cas où le résultat de détection d'utilisateur correspondant à la région sonore de détection cible indique qu'un utilisateur inconnu existe dans la région sonore de détection cible; et
la détermination d'informations de mouvement des lèvres correspondant à la région sonore de détection cible en fonction du résultat de détection d'utilisateur correspondant à la région sonore de détection cible comprend:

déterminer un premier identifiant de mouvement en tant qu'informations de mouvement des lèvres dans un cas où le résultat de détection d'utilisateur correspondant à la région sonore de détection cible indique qu'un utilisateur avec un mouvement des lèvres existe dans la région sonore de détection cible;
déterminer un deuxième identifiant de mouvement en tant qu'informations de mouvement des lèvres dans un cas où le résultat de détection d'utilisateur correspondant à la région sonore de détection cible indique qu'un utilisateur existe dans la région sonore de détection cible et que l'utilisateur n'a pas de mouvement des lèvres; et
déterminer un troisième identifiant de mouvement en tant qu'informations de mouvement des lèvres dans un cas où le résultat de détection d'utilisateur correspondant à la région sonore de détection cible indique qu'aucun utilisateur n'existe dans la région sonore de détection cible.

**3.** Procédé de détection de parole selon la revendication 1, dans lequel la génération d'un signal de commande correspondant à la région sonore de détection cible selon des informations de région sonore correspondant à la région sonore de détection cible comprend:

générer un premier signal de commande dans un cas où des informations d'utilisateur correspondant à la région sonore de détection cible indiquent qu'aucun utilisateur n'existe dans la région sonore de détection cible, le premier signal de commande appartenant au signal de commande, et le premier signal de commande étant utilisé pour effectuer un traitement de suppression sur le signal de parole d'entrée; et
générer un deuxième signal de commande dans un cas où les informations d'utilisateur correspondant à la région sonore de détection cible indiquent qu'un utilisateur existe dans la région sonore de détection cible, le deuxième signal de commande appartenant au signal de commande, et le deuxième signal de commande étant utilisé pour effectuer un traitement de rétention sur le signal de parole d'entrée.

**4.** Procédé de détection de parole selon la revendication 1, dans lequel la génération d'un signal de commande correspondant à la région sonore de détection cible selon des informations de région sonore correspondant à la région sonore de détection cible comprend:

générer le signal de commande correspondant à la région sonore de détection cible selon les informations de région sonore correspondant à la région sonore de détection cible en utilisant un algorithme prédéfini, l'algorithme prédéfini étant un algorithme de formation de faisceau adaptatif, un algorithme de séparation aveugle de sources ou un algorithme de séparation de parole basé sur l'apprentissage profond; et
le traitement d'un signal de parole d'entrée correspondant à la région sonore de détection cible en utilisant le signal de commande correspondant à la région sonore de détection cible, pour obtenir un signal de parole de sortie correspondant à la région sonore de détection cible comprend:
traiter, dans un cas où l'algorithme prédéfini est l'algorithme de formation de faisceau adaptatif, le signal de parole d'entrée correspondant à la région sonore de détection cible selon le signal de commande correspondant à la région sonore de détection cible en utilisant l'algorithme de formation de faisceau adaptatif, pour obtenir le signal de parole de sortie correspondant à la région sonore de détection cible:

traiter, dans un cas où l'algorithme prédéfini est l'algorithme de séparation aveugle de sources, le signal de parole d'entrée correspondant à la région sonore de détection cible selon le signal de commande correspondant à la région sonore de détection cible en utilisant l'algorithme de séparation aveugle de sources, pour obtenir le signal de parole de sortie correspondant à la région sonore de détection cible; et
traiter, dans un cas où l'algorithme prédéfini est l'algorithme de séparation de parole basé sur l'apprentissage profond, le signal de parole d'entrée correspondant à la région sonore de détection cible selon le signal de commande correspondant à la région sonore de détection cible en utilisant l'algorithme de séparation de parole basé sur l'apprentissage profond, pour obtenir le signal de parole de sortie correspondant à la région sonore de détection cible.

**5.** Procédé de détection de parole selon la revendication 1, dans lequel la génération d'un résultat de détection de parole pour la région sonore de détection cible en fonction du signal de parole de sortie correspondant à la région sonore de détection cible comprend:

déterminer une puissance de signal correspondant à la région sonore de détection cible en fonction du signal de parole de sortie correspondant à la région sonore de détection cible, la puissance de signal étant une puissance de signal du signal de parole de sortie à un point temps-fréquence;
déterminer un rapport signal/bruit estimé correspondant à la région sonore de détection cible en fonction de la puissance de signal correspondant à la région sonore de détection cible;
déterminer une valeur pondérée de signal de sortie correspondant à la région sonore de détection cible en fonction du rapport signal/bruit estimé correspondant à la région sonore de détection cible, la valeur pondérée de signal de sortie étant un résultat pondéré du signal de parole de sortie au point temps-fréquence;
déterminer un signal de parole de sortie cible correspondant à la région sonore de détection cible en fonction de la valeur pondérée de signal de sortie correspondant à la région sonore de détection cible, et du signal de parole de sortie correspondant à la région sonore de détection cible; et
déterminer le résultat de détection de parole correspondant à la région sonore de détection cible en fonction du signal de parole de sortie cible correspondant à la région sonore de détection cible.

**6.** Procédé de détection de parole selon la revendication 5, dans lequel la détermination d'un signal de parole de sortie cible correspondant à la région sonore de détection cible en fonction de la valeur pondérée du signal de sortie correspondant à la région sonore de détection cible, et du signal de parole de sortie correspondant à la région sonore de détection cible comprend:

déterminer un signal de parole de sortie à traiter correspondant à la région sonore de détection cible en fonction de la valeur pondérée du signal de sortie correspondant à la région sonore de détection cible, et du signal de parole de sortie correspondant à la région sonore de détection cible; et
effectuer une réduction du bruit sur le signal de parole de sortie à traiter correspondant à la région sonore de détection cible, pour obtenir le signal de parole de sortie cible correspondant à la région sonore de détection cible.

**7.** Procédé de détection de parole selon la revendication 6, dans lequel la génération d'un résultat de détection de parole pour la région sonore de détection cible en fonction du signal de parole de sortie correspondant à la région sonore de détection cible comprend:

générer un premier résultat de détection de parole dans un cas où le signal de parole de sortie cible correspondant à la région sonore de détection cible satisfait à une condition de correspondance de voix humaine, le premier résultat de détection de parole appartenant au résultat de détection de parole, et le premier résultat de détection de parole indiquant que le signal de parole de sortie cible est un signal de voix humaine; et
générer un deuxième résultat de détection de parole dans un cas où le signal de parole de sortie cible correspondant à la région sonore de détection cible ne satisfait pas à la condition de correspondance de voix humaine, le deuxième résultat de détection de parole appartenant au résultat de détection de parole, et le second résultat de détection de parole indiquant que le signal de parole de sortie cible est un signal de bruit.

**8.** Procédé de détection de parole selon l'une quelconque des revendications 1 à 7, dans lequel, après la génération d'un résultat de détection de parole pour la région sonore de détection cible selon le signal de parole de sortie correspondant à la région sonore de détection cible, le procédé comprend en outre:

déterminer une région sonore cible parmi M régions sonores selon un signal de parole de sortie correspondant à chacune des M régions sonores dans un cas où un résultat de détection de parole correspondant à chacune des M régions sonores est un premier résultat de détection de parole, le premier résultat de détection de parole indiquant que le signal de parole de sortie est un signal de voix humaine, les M régions sonores appartenant aux N régions sonores, M étant un entier supérieur ou égal à 1 et inférieur ou égal à N ; et
transmettre un signal de parole de sortie correspondant à la région sonore cible à un appelant.

**9.** Procédé de détection de parole selon l'une quelconque des revendications 1 à 7, dans lequel, après la génération d'un résultat de détection de parole pour la région sonore de détection cible selon le signal de parole de sortie correspondant à la région sonore de détection cible, le procédé comprend en outre:

déterminer une région sonore cible parmi M régions sonores selon un signal de parole de sortie correspondant à chacune des M régions sonores dans un cas où un résultat de détection de parole correspondant à chacune des M régions sonores est un premier résultat de détection de parole, le premier résultat de détection de parole indiquant que le signal de parole de sortie est un signal de voix humaine, les M régions sonores appartenant aux N régions sonores, M étant un entier supérieur ou égal à 1 et inférieur ou égal à N; et

effectuer une reconnaissance sémantique sur un signal de parole de sortie correspondant à la région sonore cible afin d'obtenir un résultat de reconnaissance sémantique; et
générer des informations de réponse de dialogue selon le résultat de reconnaissance sémantique.

**10.** Procédé de détection de parole selon l'une quelconque des revendications 1 à 7, dans lequel, après la génération d'un résultat de détection de parole pour la région sonore de détection cible selon le signal de parole de sortie correspondant à la région sonore de détection cible, le procédé comprend en outre:

déterminer une région sonore cible parmi M régions sonores selon un signal de parole de sortie correspondant à chacune des M régions sonores dans un cas où un résultat de détection de parole correspondant à chacune des M régions sonores est un premier résultat de détection de parole, le premier résultat de détection de parole indiquant que le signal de parole de sortie est un signal de voix humaine, les M régions sonores appartenant aux N régions sonores, M étant un entier supérieur ou égal à 1 et inférieur ou égal à N; et
effectuer un traitement de segmentation sur un signal de parole de sortie correspondant à la région sonore cible pour obtenir des données audio à reconnaître;
effectuer une reconnaissance vocale sur des données audio à reconnaître correspondant à la région sonore cible pour obtenir un résultat de reconnaissance vocale; et
générer des informations d'enregistrement de texte selon un résultat de reconnaissance vocale correspondant à la région sonore cible, les informations d'enregistrement de texte comprenant au moins l'un parmi un texte de traduction ou un texte d'enregistrement de conférence.

**11.** Dispositif informatique comprenant: une mémoire, un émetteur-récepteur, un processeur et un système de bus,

la mémoire étant configurée pour stocker un programme,
le processeur étant configuré pour exécuter le programme dans la mémoire et pour mettre en œuvre le procédé selon l'une quelconque des revendications 1 à 10 selon des instructions dans un code de programme; et
le système de bus étant configuré pour connecter la mémoire et le processeur afin d'amener la mémoire et le processeur à effectuer une communication.

**12.** Support de stockage lisible par ordinateur et comprenant des instructions qui, lorsqu'elles sont exécutées sur un ordinateur, amènent l'ordinateur à mettre en œuvre le procédé de détection de parole selon l'une quelconque des revendications 1 à 10.

**13.** Produit de programme informatique, dans lequel le produit de programme informatique, lorsqu'il est exécuté, est configuré pour mettre en œuvre le procédé selon l'une quelconque des revendications 1 à 10.

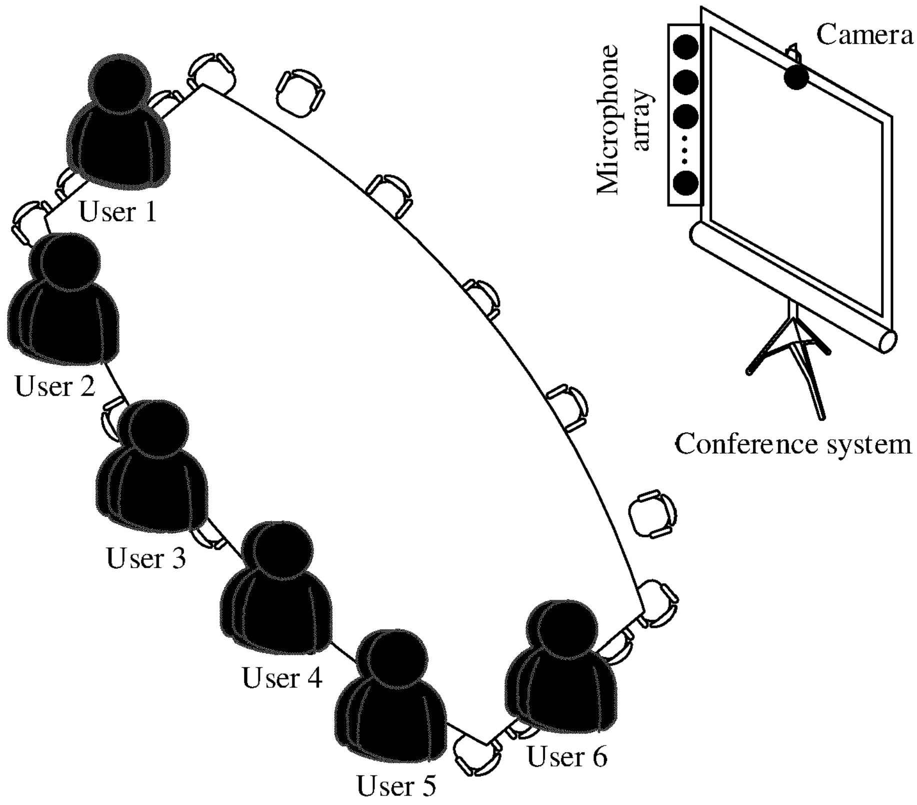
Camera
Microphone array
User 1
User 2
User 3
User 4
User 5
User 6
Conference system

FIG. 1

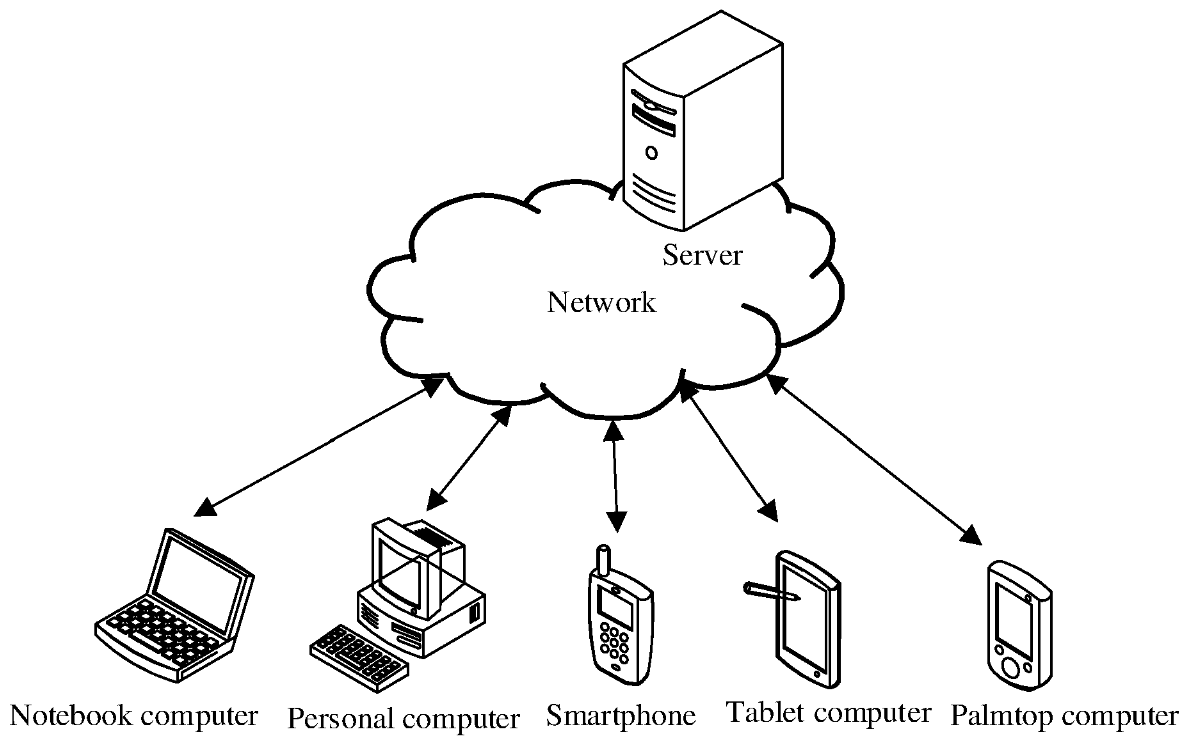
Server
Network
Notebook computer
Personal computer
Smartphone
Tablet computer
Palmtop computer

FIG. 2

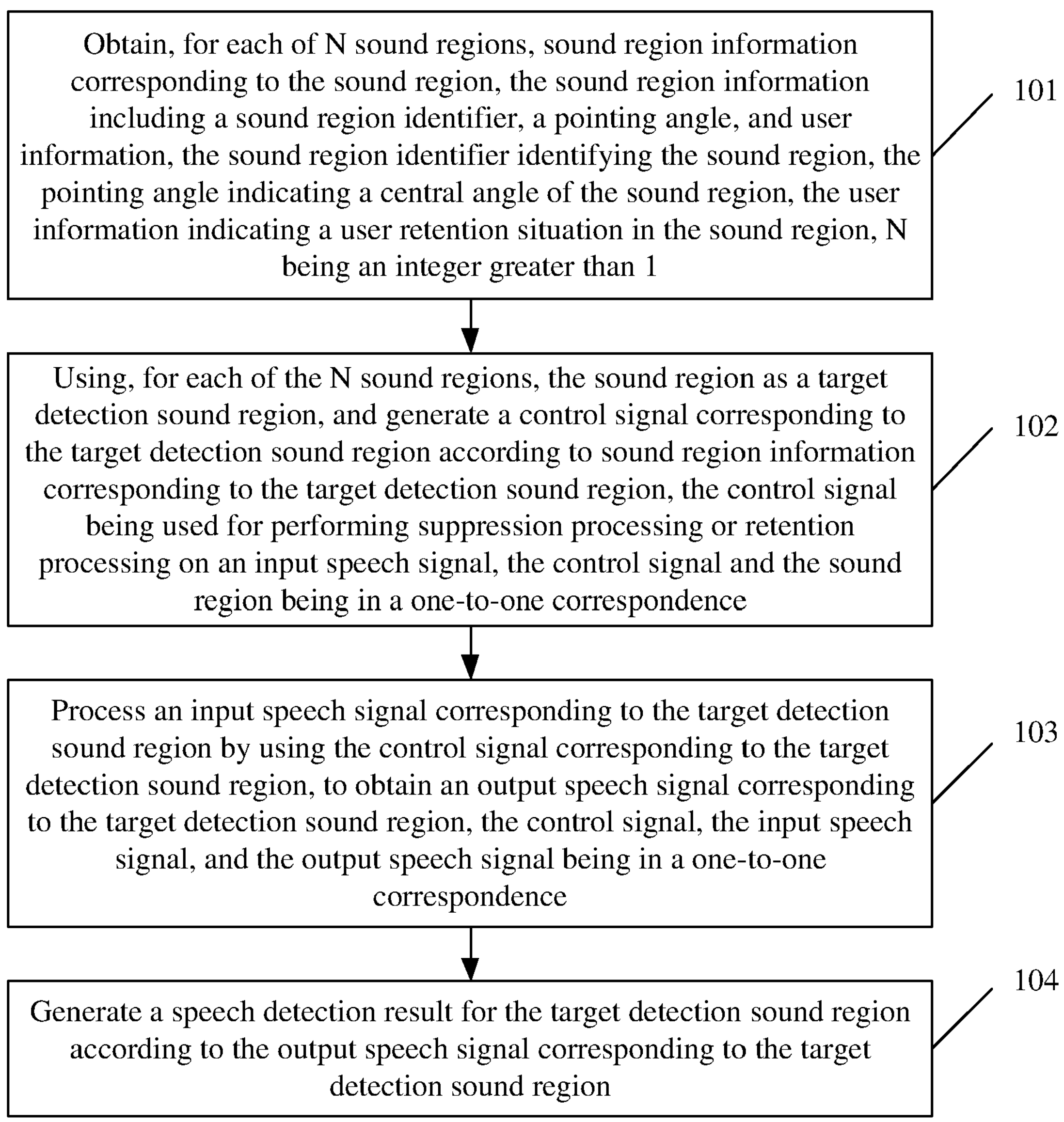
Obtain, for each of N sound regions, sound region information corresponding to the sound region, the sound region information including a sound region identifier, a pointing angle, and user information, the sound region identifier identifying the sound region, the pointing angle indicating a central angle of the sound region, the user information indicating a user retention situation in the sound region, N being an integer greater than 1
101
Using, for each of the N sound regions, the sound region as a target detection sound region, and generate a control signal corresponding to the target detection sound region according to sound region information corresponding to the target detection sound region, the control signal being used for performing suppression processing or retention processing on an input speech signal, the control signal and the sound region being in a one-to-one correspondence
102
Process an input speech signal corresponding to the target detection sound region by using the control signal corresponding to the target detection sound region, to obtain an output speech signal corresponding to the target detection sound region, the control signal, the input speech signal, and the output speech signal being in a one-to-one correspondence
103
Generate a speech detection result for the target detection sound region according to the output speech signal corresponding to the target detection sound region
104

**FIG. 3**

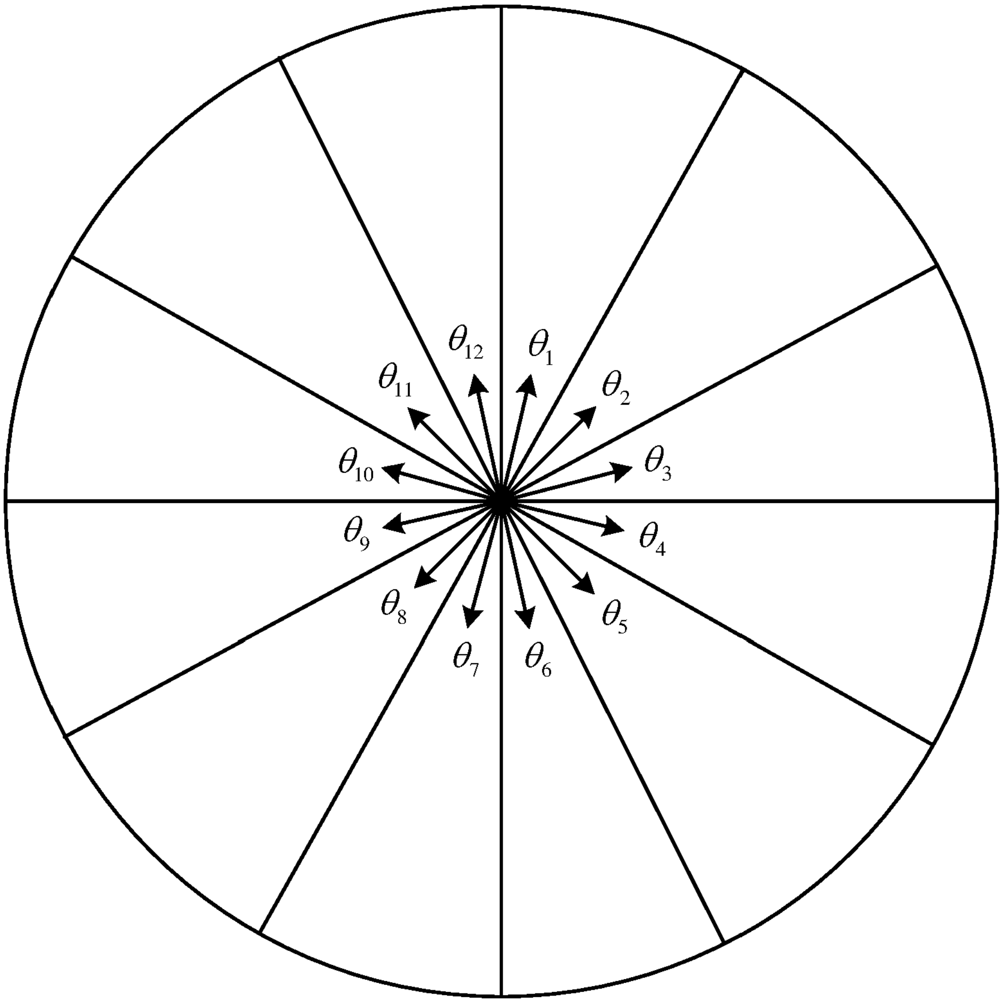
$\theta_{12}$
$\theta_1$
$\theta_{11}$
$\theta_2$
$\theta_{10}$
$\theta_3$
$\theta_9$
$\theta_4$
$\theta_8$
$\theta_5$
$\theta_7$
$\theta_6$

FIG. 4

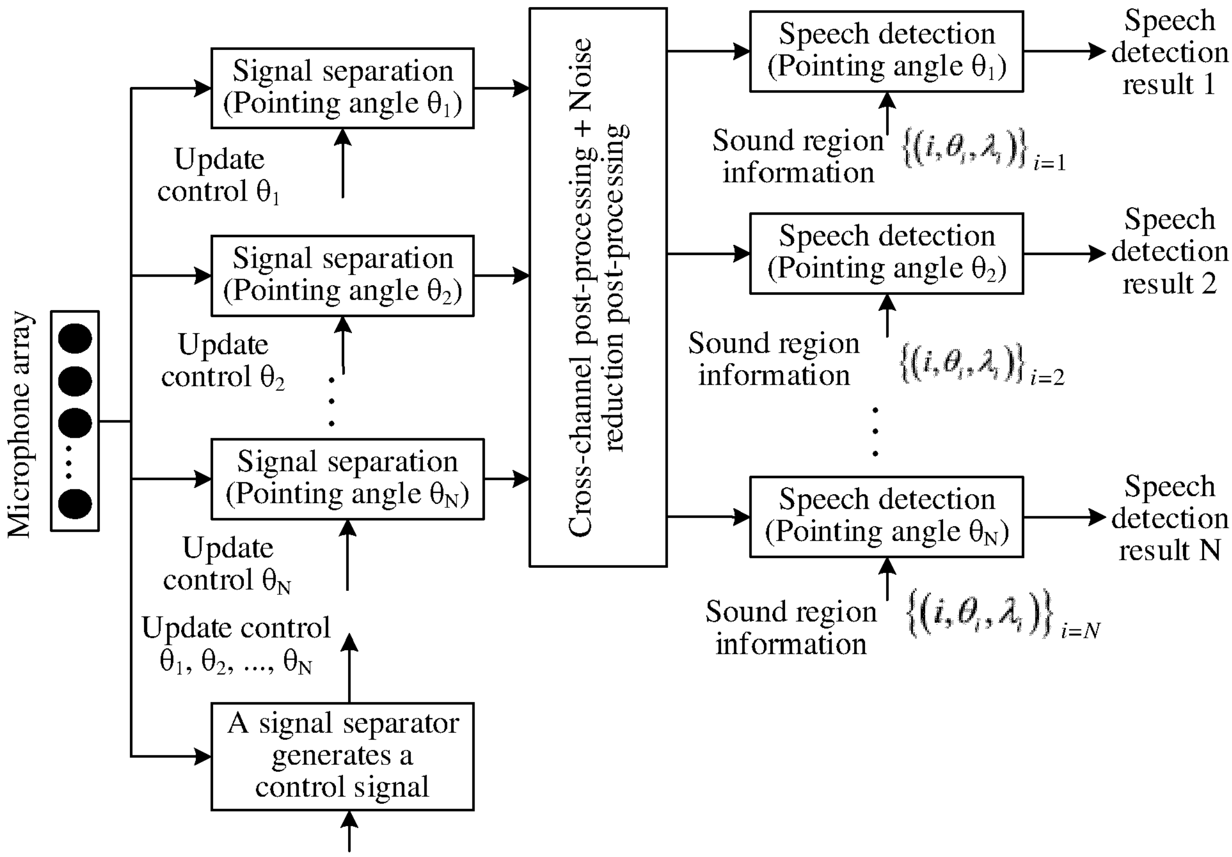

Microphone array
Signal separation (Pointing angle θ1)
Update control θ1
Signal separation (Pointing angle θ2)
Update control θ2
Signal separation (Pointing angle θN)
Update control θN
Update control θ1, θ2, ..., θN
A signal separator generates a control signal
Cross-channel post-processing + Noise reduction post-processing
Speech detection (Pointing angle θ1)
Speech detection result 1
Sound region information {(i, θi, λi)} i=1
Speech detection (Pointing angle θ2)
Speech detection result 2
Sound region information {(i, θi, λi)} i=2
Speech detection (Pointing angle θN)
Speech detection result N
Sound region information {(i, θi, λi)} i=N


**FIG. 5**

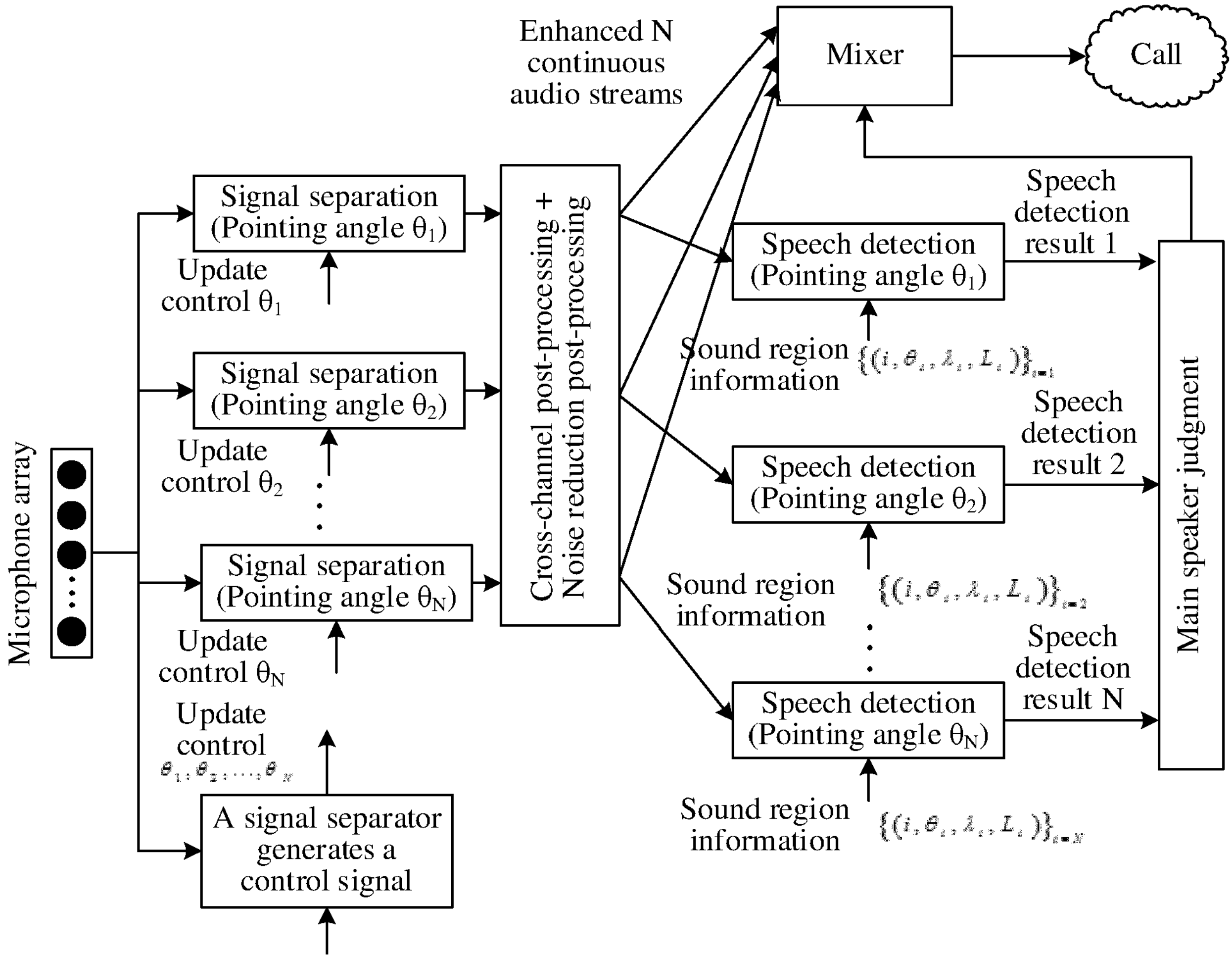
Microphone array
Signal separation (Pointing angle θ1)
Update control θ1
Signal separation (Pointing angle θ2)
Update control θ2
Signal separation (Pointing angle θN)
Update control θN
Update control θ1, θ2, ..., θN
A signal separator generates a control signal
Cross-channel post-processing + Noise reduction post-processing
Enhanced N continuous audio streams
Mixer
Call
Speech detection (Pointing angle θ1)
Speech detection (Pointing angle θ2)
Speech detection (Pointing angle θN)
Sound region information
{(i, θi, λi, Li)}i=1
Sound region information
{(i, θi, λi, Li)}i=2
Sound region information
{(i, θi, λi, Li)}i=N
Speech detection result 1
Speech detection result 2
Speech detection result N
Main speaker judgment

FIG. 6

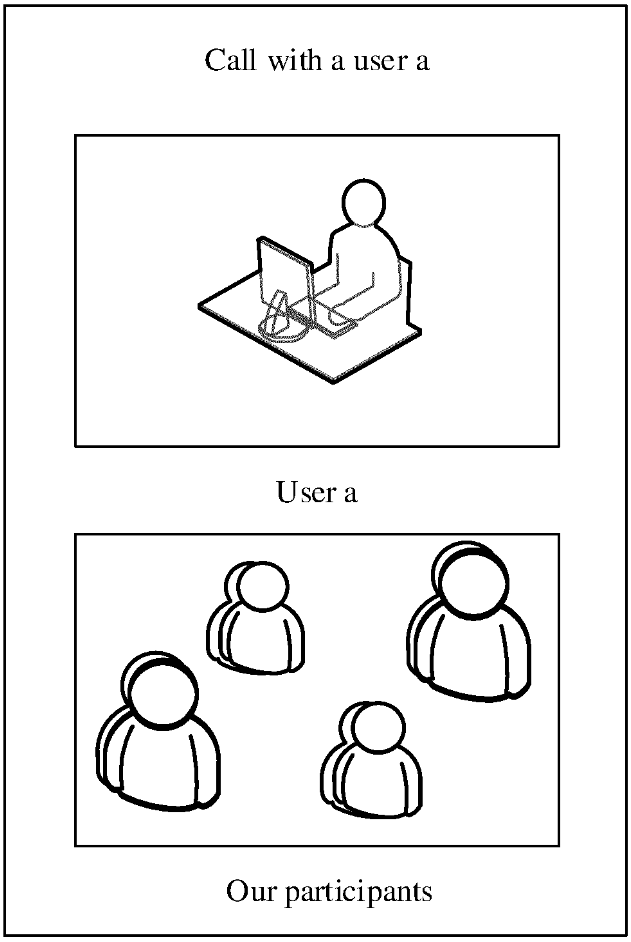


FIG. 7

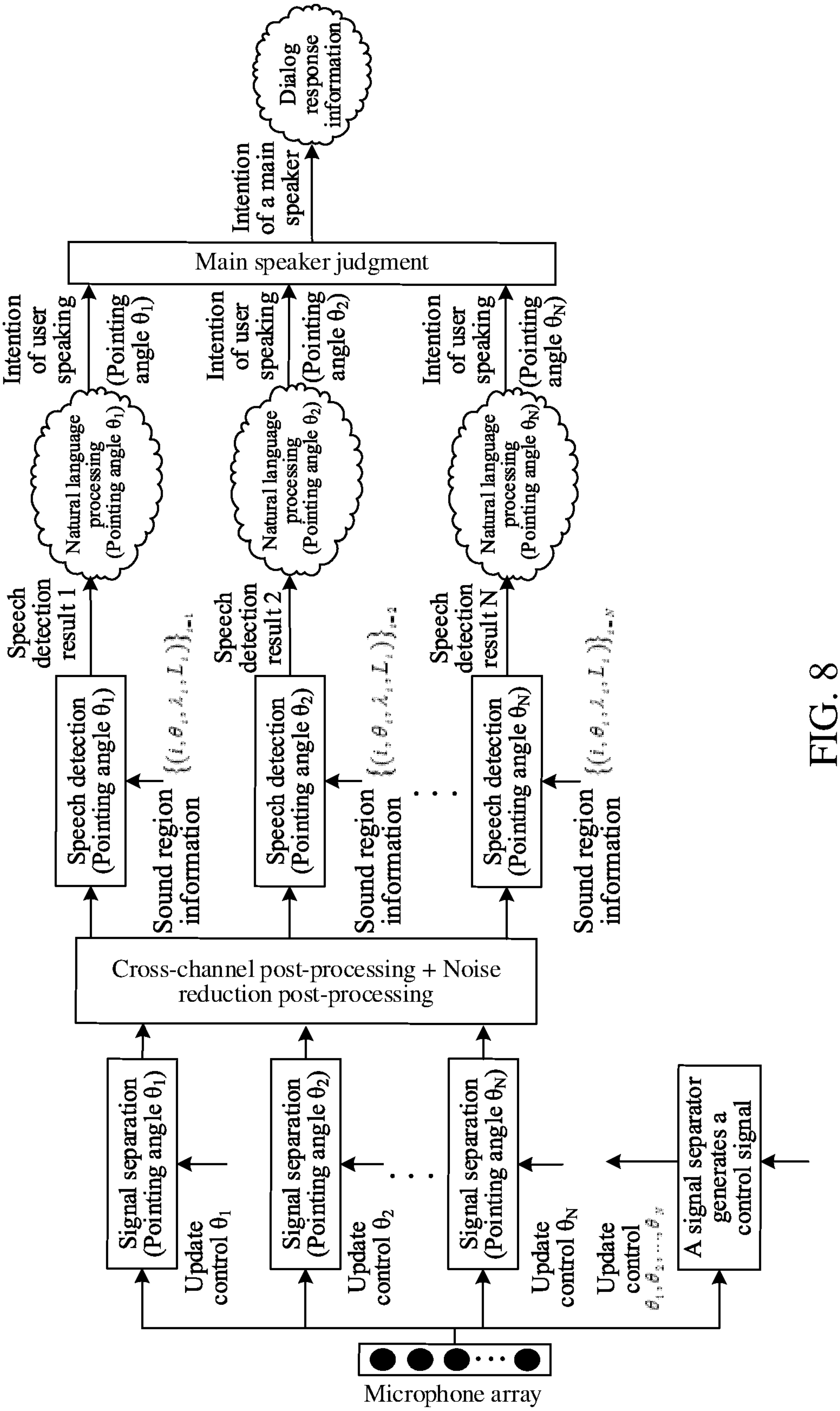
Microphone array
Signal separation (Pointing angle θ1)
Signal separation (Pointing angle θ2)
Signal separation (Pointing angle θN)
A signal separator generates a control signal
Update control θ1
Update control θ2
Update control θN
Update control θ1, θ2, ..., θN
Cross-channel post-processing + Noise reduction post-processing
Speech detection (Pointing angle θ1)
Speech detection (Pointing angle θ2)
Speech detection (Pointing angle θN)
Sound region information
Sound region information
Sound region information
Speech detection result 1
Speech detection result 2
Speech detection result N
Natural language processing (Pointing angle θ1)
Natural language processing (Pointing angle θ2)
Natural language processing (Pointing angle θN)
Intention of user speaking (Pointing angle θ1)
Intention of user speaking (Pointing angle θ2)
Intention of user speaking (Pointing angle θN)
Main speaker judgment
Intention of a main speaker
Dialog response information

FIG. 8

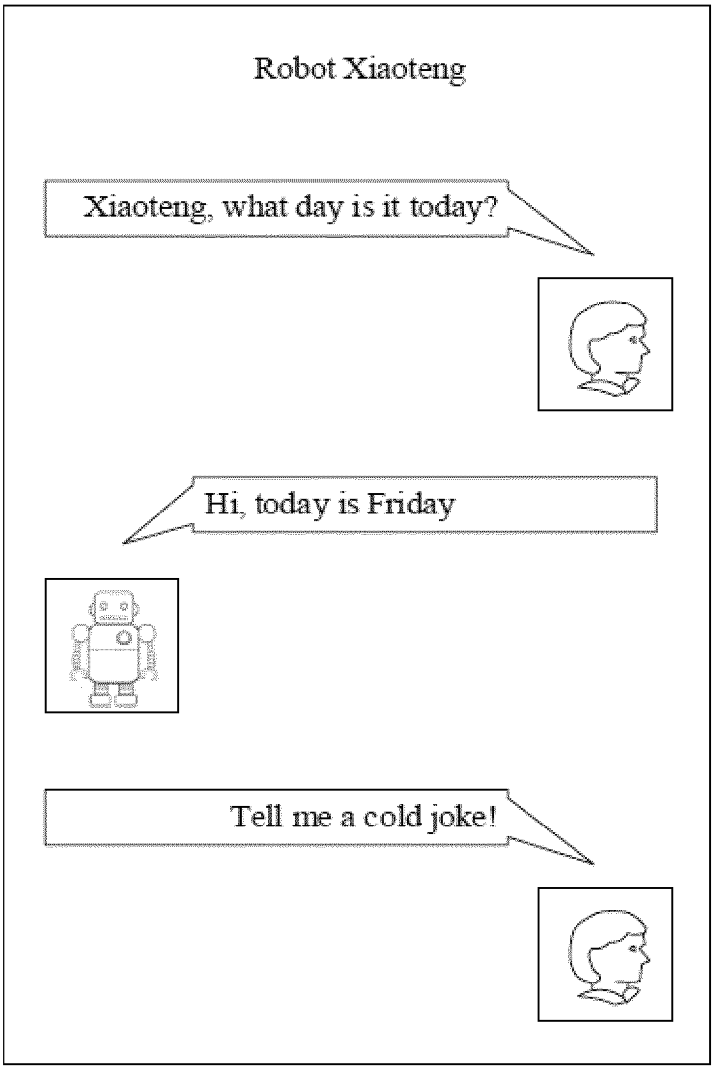
Robot Xiaoteng
Xiaoteng, what day is it today?
Hi, today is Friday
Tell me a cold joke!

FIG. 9

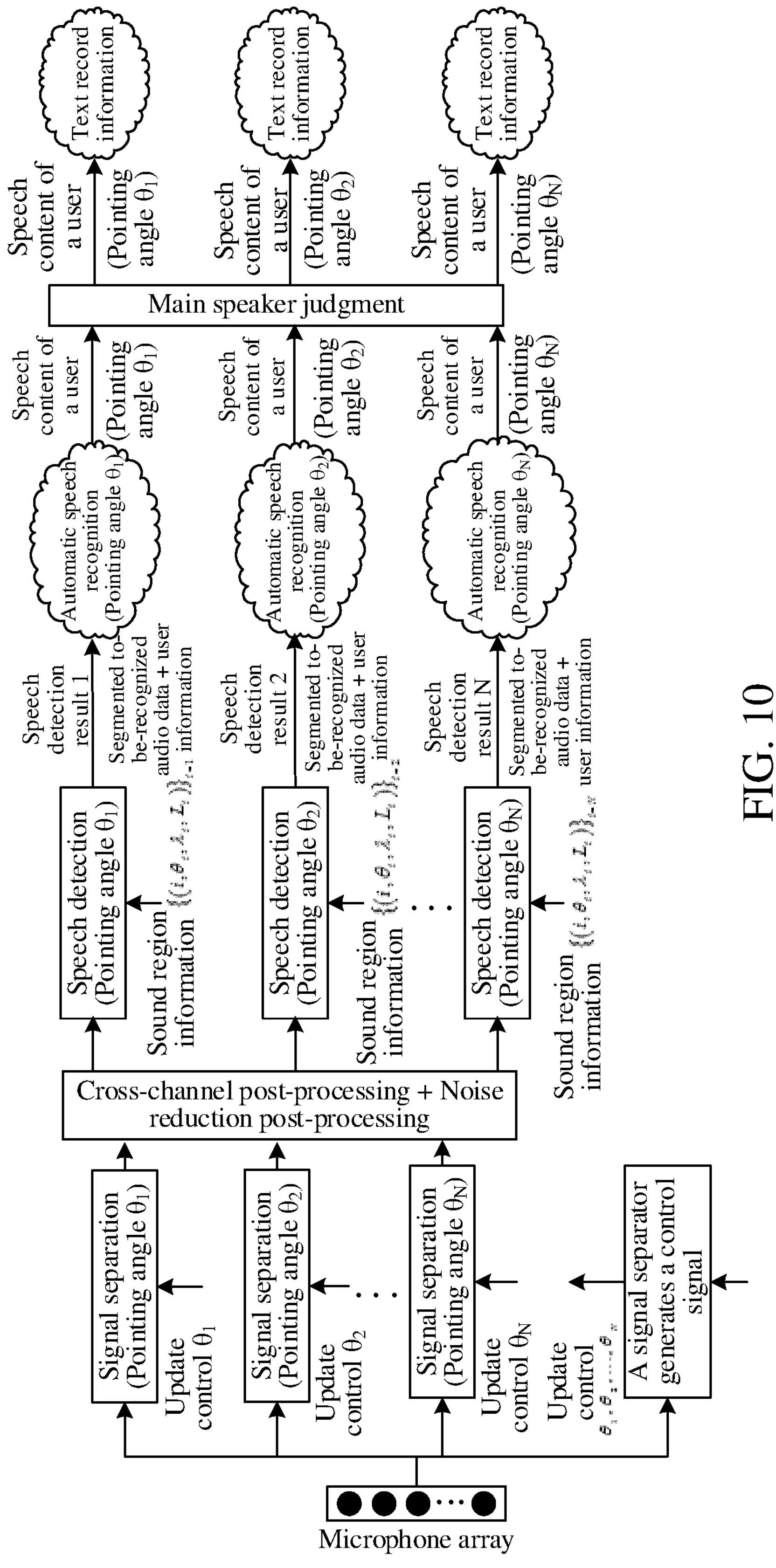
Microphone array
Signal separation (Pointing angle $\theta_1$)
Signal separation (Pointing angle $\theta_2$)
Signal separation (Pointing angle $\theta_N$)
Update control $\theta_1$
Update control $\theta_2$
Update control $\theta_N$
Update control $\theta_1, \theta_2, \ldots, \theta_N$
A signal separator generates a control signal
Cross-channel post-processing + Noise reduction post-processing
Speech detection (Pointing angle $\theta_1$)
Speech detection (Pointing angle $\theta_2$)
Speech detection (Pointing angle $\theta_N$)
Sound region information $\{(i, \theta_i, \lambda_i, L_i)\}_{i=1}$
Sound region information $\{(i, \theta_i, \lambda_i, L_i)\}_{i=2}$
Sound region information $\{(i, \theta_i, \lambda_i, L_i)\}_{i=N}$
Speech detection result 1
Speech detection result 2
Speech detection result N
Segmented to-be-recognized audio data + user information
Automatic speech recognition (Pointing angle $\theta_1$)
Automatic speech recognition (Pointing angle $\theta_2$)
Automatic speech recognition (Pointing angle $\theta_N$)
Speech content of a user (Pointing angle $\theta_1$)
Speech content of a user (Pointing angle $\theta_2$)
Speech content of a user (Pointing angle $\theta_N$)
Main speaker judgment
Text record information

FIG. 10

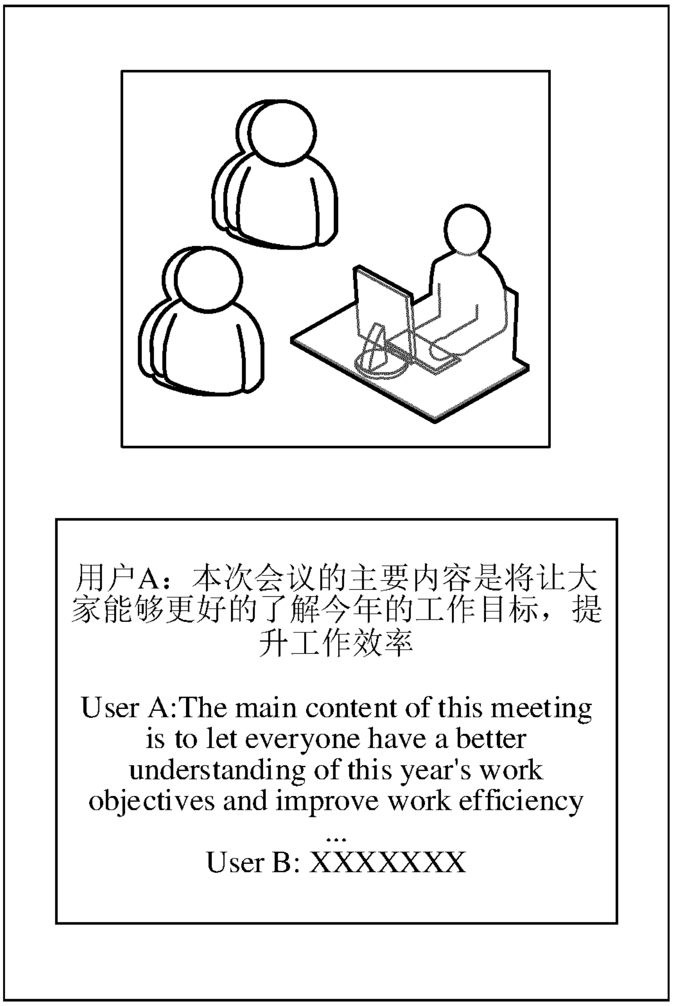
用户A：本次会议的主要内容是将让大家能够更好的了解今年的工作目标，提升工作效率
User A:The main content of this meeting is to let everyone have a better understanding of this year's work objectives and improve work efficiency
...
User B: XXXXXXX

FIG. 11

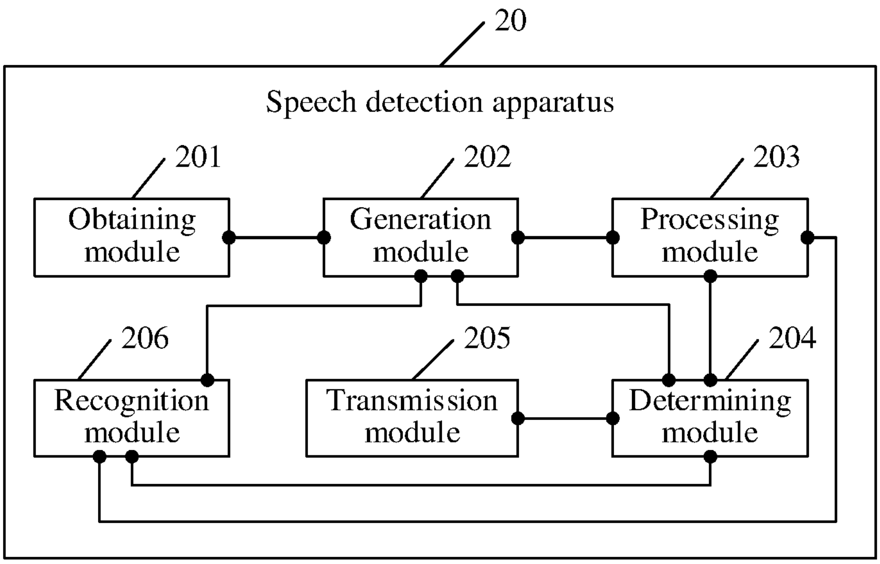
20
Speech detection apparatus
201
Obtaining module
202
Generation module
203
Processing module
206
Recognition module
205
Transmission module
204
Determining module

FIG. 12

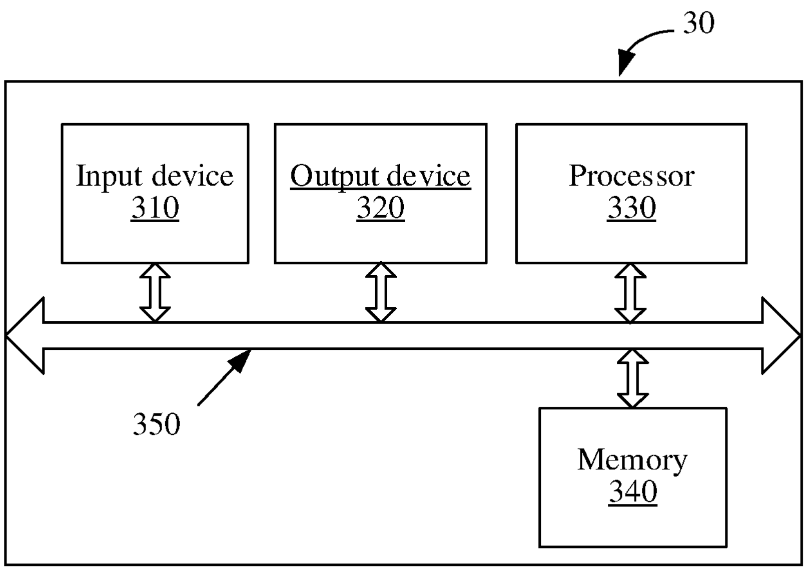
30
Input device
310
Output device
320
Processor
330
350
Memory
340

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2011366 B1


### Non-patent literature cited in the description


- **GUOBIN OU et al.** Speaker identification using speech and lip features. *PROCEEDINGS. 2005 IEEE INTERNATIONAL JOINT CONFERENCE ON MONTREAL*, 2005